# EUROPEAN PATENT APPLICATION

(11) **EP 1 835 667 A1**
(43) Date of publication of application: **19.09.2007**
(21) Application number: 05822553.3
(22) Date of filing: 27.12.2005
(51) Int. Cl.: H04L 12/56

(54) **COMMUNICATION SYSTEM, RESOURCE MANAGEMENT DEVICE, RESOURCE MANAGEMENT METHOD, COMMUNICATION MANAGEMENT DEVICE, AND COMMUNICATION MANAGEMENT METHOD**

(30) Priority: 07.01.2005 JP 2005002928; 20.05.2005 JP 2005148475; 02.08.2005 JP 2005224713
(71) Applicant: MATSUSHITA ELECTRIC INDUSTRIAL CO., LTD., Osaka 571-8501 (JP)
(72) Inventor: HORI, Takako, Matsushita Electric Industrial Co.,Ltd.,, Osaka-shi, Osaka 540-6319 (JP); CHENG, Hong, Panasonic Singapore, Laboratories Pte.Ltd, Tai Seng Industrial Estate, Singapore 534415 (SG); UE, Toyoki, Matsushita Electric Industrial Co.,Ltd.,, Osaka-shi, Osaka 540-6319 (JP); HUANG, Qijie , Panasonic Singapore, Laboratories Pte.Ltd, Tai Seng Industrial Estate, Singapore 534415 (SG)
(74) Representative: Pautex Schneider, Nicole Véronique
(86) International application number: PCT/JP2005/023874
(87) International publication number: WO 2006/073084

(57) **Abstract**

An object is, when a mobile terminal performs a handover, to more quickly reset a path after the handover and reduce interrupt time (particularly interrupt time of a QoS path) of packet communication. For example, in a state in which a MN 101 has not acquired an address (NCoA) of a new connection destination (AR 109), the MN 101 requests that a QNE (proxy) 123 start a process of establishing a QoS path used when the MN 101 is connected to a new connection destination. The QNE (proxy) makes a resource reservation between the ONE (proxy) itself and a CN 121. As a result, in an upper stream above a QNE (CRN 115), new path information (filter B) is correlated with path information (filter A) used when the MN is connected to an AR 105. Until when the MN uses the actual new CoA and updates the QoS path after movement, the data packet is encapsulated by a proxy node and transmitted based on the path information (filter B).

## Description

### TECHNICAL FIELD

The present invention relates to a communication system, a resource management device, a resource management method, a communication management device, and a communication management method. In particular, the present invention relates to a communication system, a resource management device, a resource management method, a communication management device, and a communication management method used in a communication network performing packet transfer.

### BACKGROUND ART

A technology using a mobile internet protocol (IP) is becoming popular as a technology that can provide a user accessing a communication network, such as the Internet, from a mobile terminal through a wireless network with a seamless connection to the communication network, even during movement. The mobile IP is a next-generation internet protocol.

At the same time, services such as a Quality of Service (QoS) guarantee (in the present specification, such services are referred to as additional services) are provided for communication performed using the network. Various communication protocols actualizing these additional services are provided. Among these various communication protocols, a resource reservation protocol (RSVP), for example, is provided as a protocol for guaranteeing QoS. In the RSVP, a bandwidth reservation is made on a path (flow) from a transmitting communication terminal to a receiving communication terminal. The transmitting communication terminal transmits data. The receiving communication terminal receives data. As a result, the RSVP allows data to be smoothly transmitted from the transmitting communication terminal to the receiving communication terminal.

Regarding a mobile node (MN) performing a handover between subnetworks (subnets), it is requested that additional services, such as the QoS guarantee, received before the handover should be continuously received after the handover. However, there is a problem in that the RSVP does not sufficiently support MN movement.

To solve the problem, standardization of a new protocol called Next Step in Signaling (NSIS) is currently being discussed by the Internet Engineering Task Force (IETF) (refer to Non-patent Document 2, below). The NSIS is expected to have a particularly positive effect on the various additional services, such as the QoS guarantee, in a mobile environment. Documents describing conditions and realization methods for realizing the QoS guarantee and mobility support through the NSIS are available (refer, for example, to Non-patent Document 3 to Non-patent Document 7) . Hereafter, an overview of the NSIS that is a draft specification by the NSIS Working Group of the IETF and a method of establishing a QoS path are described (refer to Non-patent Document 4 and Non-patent Document 7).

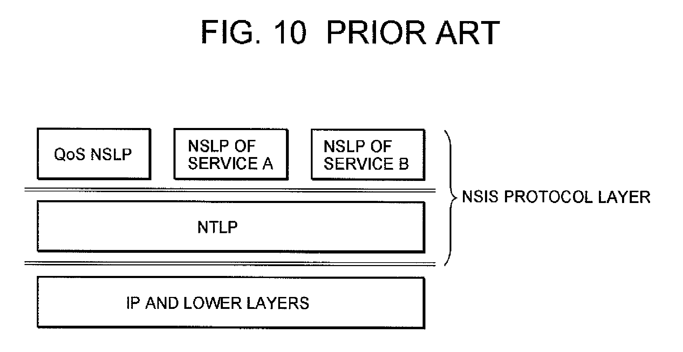

Fig. 10 is a diagram of a protocol stack of the NSIS and its lower layers for explaining a NSIS protocol configuration according to a conventional technology. The NSIS protocol layer is positioned directly above the IP and the lower layers. The NSIS protocol layer includes two layers, a NSIS signaling layer protocol (NSLP) and a NSIS transport layer protocol (NTLP). The NSLP generates a signaling message for providing respective additional services and processes the signaling message. The NTLP routes the signaling message generated by the NSLP. Various NSLP are provided, such as a NSLP for QoS (QoS NSLP) and NSLP for other certain additional services (service A and service B) (NSLP of service A and NSLP of service B).

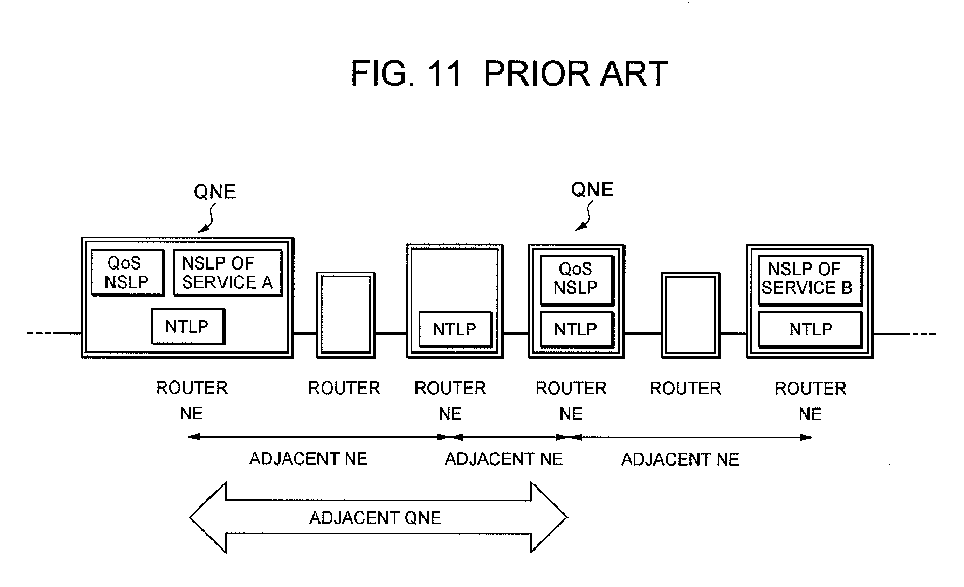

Fig. 11 is a schematic diagram explaining a concept of a NSIS entity (NE) and a QoS NSIS entity (QNE) being "adjacent". NE and QNE are NSIS nodes according to the conventional technology. As shown in Fig. 11, all nodes having a NSIS function (NE) include at least the NTLP. The NSLP is not necessarily required to be present above the NTLP. Alternatively, one or more NSLP can be present above the NTLP. Here, the NE supporting the QoS NSLP is particularly referred to as the QNE. A terminal or a router can be the NE. A plurality of routers that are not the NE can be present between adjacent NE. In addition, a plurality of routers that are not the NE and a plurality of NE that do not support the QoS NSLP can also be present between adjacent NE.

The NSIS covers a variety of functions in not only the mobile environment, but also a normal, static environment. However, the present specification focuses on a function for realizing an establishment of a mobility-supported additional service. The function is one of the functions of the NSIS. As a result of the implementation of the NSIS, the establishment of the mobility-supported additional service can be realized.

When the MN moves to a new subnetwork (referred to, hereinafter, as a subnet), a new QoS path is required to be established between the MN and a correspondent node (CN). A required QoS treatment is not performed on a data packet until the new QoS path is established. As a result, a QoS interruption occurs. The QoS interruption is required to be kept to a minimum to actualize smooth and seamless mobility.

MRSVP is disclosed in Non-patent Document 8, below, as one method addressing such problems. A method for establishing a QoS path for mobile IP triangle routes by using a modified RSVP is proposed in the Non-patent Document 8. Here, a "local proxy agent (equivalent to a home agent [HA]) " and a "remote proxy agent (equivalent to a foreign agent [FA])" can establish the QoS path for the MN.

After acquiring a new care-of address (NCoA) of the MN, the remote proxy agent sets up a QoS path between itself and the CN. Next, a path between the remote proxy agent and the local proxy agent (in other words, between the FA and the HA) is newly established. The path between the remote proxy agent and the local proxy agent and the path between the local proxy agent and the CN (in other words, between FA and CN) are merged. A detailed method of path-merging is not described.

When the MN performs a handover between subnets, a portion of the old path before the handover and a portion of the new path after the handover may overlap. In this case, various problems may occur, such as a double-reservation of the overlapping paths and difficulty in path changes. As a method for solving these problems, a method for specifying a position at which the old path and the new path crossover is given. A communication node present on a crossover point is referred to as a crossover node (CRN). For example, methods described in Non-patent Document 9, Non-patent Document 10 and the like are known as the methods for specifying the CRN.

The establishment of the QoS path described in the present specification refers to a state in which a state for routing a signaling message in the NTLP layer is established and a resource reserving process for the QoS guarantee is completed by the NSLP layer. The QoS path refers to a path through which a data packet that is guaranteed the QoS passes.
The resource reservation for the QoS guarantee and the establishment of the state for routing in the NTLP layer can be performed simultaneously. Alternatively, the resource reservation for the QoS guarantee can be performed after the establishment of the state for routing.

According to Non-patent Document 11A, below, the state for routing the signaling message is established when a first NSIS message is sent in a downstream direction (a direction in which a data packet is sent). In other words, when the QoS of the data packet for a certain session is guaranteed, the first QNE through which the data packet passes transmits a signaling message for QoS reservation or a signaling message in preparation for the QoS reservation to a receiver of the data packet. At this time, information, such as a session identifier (ID) identifying the session and a flow ID identifying the flow, are attached to the NTLP layer of the signaling message. In addition, a router alert option (RAO) is attached to the IP layer. In the IP layer of the QNE through which the signaling message is passing, the signaling message is intercepted as a result of the presence of the RAO. The signaling message is passed to the NSIS layer (the NTLP layer and the NSLP layer). The NSIS layer confirms the content of the signaling message.

In the NTLP layer of the QNE that has intercepted the signaling message, first, information on the flow ID and the session ID and information on an IP address of a preceding adjacent QNE, from which the signaling message has been transmitted, are stored as the state for routing. A response message in the NTLP level is returned to the preceding adjacent QNE. As a result, the NTLP layer of the preceding QNE can know the IP address of the succeeding QNE. The IP address is held by being written in the state for routing. When transmission and reception of the signaling message is required to be performed securely, negotiations regarding security and the like are performed in addition, through procedures such as message association.

At the same time, on the NSLP side, a process depending on the content of the NSLP message is performed. When the process is completed, the NTLP again transfers the signaling message toward the destination (here, the recipient of the data packet).

In this way, as a result of the signaling message arriving at a predetermined destination, information related to the state for routing is established in the NTLP layer. In particular, when the message association is established, subsequent signaling messages having corresponding session ID and flow ID can be transmitted and received using the state for routing established as described above, without using the RAO.

In addition, to dynamically create policy rules in a network address translation (NAT) and a firewall (FW), NATFW NSLP (refer to Non-patent Document 13, below) is proposed in the NSIS as one function of the NSLP layer.

The NAT is a technology for translating private address information used only within a local area network (LAN) and global address information used on the Internet. In addition to the IP address, a combination of the IP address and a port number and the like are used as the address information. Translation information regarding which private address information is associated with which global address information is held within a NAT-supporting node as the policy rule. The FW is a technology for filtering packets entering the LAN and packets being sent outside of the LAN (for example, the Internet) from the LAN. The IP address, the port number, and the like are used for filtering. The filtering information is held within a FW-supporting node as the policy rule. Functions of the NAT and the FW are often implemented within a single node. In the present specification, the functions of both the NAT and the FW are referred to as a NATFW. A node having the functions of both the NAT and the FW is referred to as a NATFW node.

A basic operation of the NATFW NSLP is as follows:
(1) A NATFW NSLP-supporting node that is a data transmitter transmits a CREATE message to a NATFW NSLP-supporting node that is a data receiver.
(2) A NATFW NSLP-supporting node present on the path intercepts the CREATE message.
(3) If the node has the NATFW function, the node creates a policy rule based on parameters included in the CREATE message.

The parameters included in the CREATE message are address information of the subject data packet, an action (for example, a process such as allowing/not allowing the packet to pass) and supplementary information on the action (such as lifetime). The address information of the data packet is cited from the flow ID.

As with the QoS NSLP, when the data transmitter and the data receiver are not NATFW NSLP-supporting nodes, the node that is the NATFW NSLP-supporting node present on the data path and closest to the data transmitter (or the data receiver) becomes the signaling message transmitter (or receiver). As a premise for transmitting the CREATE message, it is stipulated that the policy rule for allowing the NSIS message to pass is created in advance in the NATFW node.

The flow ID is included in the NTLP. The flow ID is used as data packet filtering information in the NSLP layer (for example, a packet classifier in the QoS guarantee). To allow the data packet filtering information to be compatible with the NAT, in Non-patent Document 11B, it is requested that the NAT supports the NTLP and the content of the flow ID is simultaneously translated with the translation of packet header address information.
Non-patent Document 1: R. Braden, L.Zhang, S. Berson, S. Herzog and S. Jamin, "Resource Reservation Protocol-Version 1 Functional Specification", RFC 2205, September 1997.
Non-patent Document 2: NSIS WG
   (http://www.ietf.org/html.charters/nsis-charter.html)
Non-patent Document 3: H. Chaskar, Ed, "Requirements of a Quality of Service (QoS) Solution for Mobile IP", RFC 3583, September 2003
Non-patent Document 4: Sven Van den Bosch, Georgios Karagiannis and Andrew McDonald, "NSLP for Quality-of-Service signaling", draft-ietf-nsis-qos-nslp-05.txt, October 2004
Non-patent Document 5: X. Fu, H. Schulzrinne, H. Tschofenig, "Mobility issues in Next Step signaling", draft-fu-nsis-mobility-01.txt, October 2003
Non-patent Document 6: S. Lee, et. Al., "Applicability Statement of NSIS Protocols in Mobile Environments", draft-ietf-nsis-applicability-mobility-signaling-00.txt, October 18, 2004
Non-patent Document 7: R. Hancock (editor), "Next Steps in Signaling: Framework", draft-ietf-nsis-fw-07.txt, November 1, 2003
Non-patent Document 8: MRSVP: A. K. TALUKDAR, B.R. BADRINATH and A. ACHARYA, "A Resource Reservation Protocol for an Integrated Service Network with Mobile Hosts", Wireless Network 7 pp5-19, 2001
Non-patent Document 9: T. Sanda, T. Ue, "Pre CRN discovery from proxy on candidate new path", draft-sanda-nsis-mobility-qos-proxy-01.txt, February 2004 Non-patent Document 10: Takako Sanda, Toyoki Ue, Takashi Aramaki, "A proposal for a seamless QoS path establishing method supporting mobility" Institute of Electronics, Information and Communication Engineers, Technical Committee on Mobile Multimedia Communications (MoMuC) Vol. 104 No. 38, pp59-64, May 2004
Non-patent Document 11A : H. Schulzrinne, R. Hancock, "GIMPS: General Internet Messaging Protocol for Signaling", draft-ietf-nsis-ntlp-05.txt, February 2005
Non-patent Document 11B: H. Schulzrinne, R. Hancock, "GIMPS: General Internet Messaging Protocol for Signaling", draft-ietf-nsis-ntlp-07.txt, July 18, 2005
Non-patent Document 12: Takako Sanda, et. Al., "A proposal for a QoS state managing method in a communication using mobile IP", Institute of Electronics, Information and Communication Engineers, Technical Committee on Information Network (IN), Vol. 104, No. 564, IN2004-144, pp1-6, January 2005
Non-patent Document 13: M. Stiemerling, H. Tschofenig and C. Aoun "NAT/Firewall NSIS Signaling Layer Protocol (NSLP)", draft-ietf-nsis -nslp-natfw-07.txt, July 18, 2005

The conventional technology has two main issues (a first issue and a second issue) described below.

First, the first issue related to the conventional technology will be described. For example, in the method described in Non-patent Document 8, the proxy in the new subnet is used to establish the QoS path for the MN in advance.
The QoS path is established only after the NCoA of the MN is acquired. However, the proxy may not be able to acquire the NCoA of the MN before the MN actually moves. A smooth path establishment may be obstructed by the process of acquiring the NCoA in advance.

In addition, attempts to establish the QoS path is required to be made over several paths. Based on the results of such establishment of the QoS path, the MN may decide to move to a new connection point. Therefore, a NCoA of the MN may be generated after the establishment of the QoS path. In this case, it is difficult for the proxy to acquire the NCoA of the MN at each connection point that may be the new connection point of the MN.

Next, the second issue related to the conventional technology will be described. In the current specifications of the NSIS, the flow ID is used as the packet classifier, as is. Therefore, the flow ID is required to include header information of the data packet. This requirement makes a smooth QoS path change during the MN handover difficult. Furthermore, when a terminal performs communication using a plurality of IP addresses and a plurality of port numbers for one session (for example, when the terminal is in a multihomed- state) or when a change occurs in the IP addresses or the port numbers during the session, management of the QoS path may become very difficult.

### DISCLOSURE OF THE INVENTION

In light of the above-described problems, a first object of the present invention is, when a mobile terminal performs a handover, to more quickly reset a path after the handover and reduce interrupt time of packet communication (particularly the interrupt time of a QoS path).

A second object of the invention is to facilitate path (particularly the QoS path) management when a terminal performs communication using a plurality of IP addresses or a plurality of port numbers for a single session or when a change occurs in the IP address or the port number during a session.

To achieve the objects, a communication system of the invention is a communication system in which a plurality of access routers respectively forming a subnet are connected via a communication network. The communication system can establish a path for providing an additional service for communication between arbitrary communication terminals via the communication network. The communication system includes a moveable mobile terminal, a communication partner terminal, and a communication node present in the communication network. The mobile terminal is connected to a first access router that is one access router among the plurality of access routers and communicates using a first address acquired in a first subnet formed by the first access router. The communication partner terminal is connected to the communication network and serves as a communication partner of the mobile terminal. The communication node can start a process for establishing a second path used to provide the additional service for communication between the mobile terminal and the communication partner terminal when the mobile terminal is connected to a second access router, in a state in which a first path for providing the additional service for the communication between the mobile terminal connected to the first access router and the communication partner terminal is established, without using a second address acquired in a second subnet formed by the second access router when the mobile terminal is connected to the second access router that is one access router among the plurality of access routers.
As a result of the configuration, when the mobile terminal performs the handover, a communication node functioning as a proxy can more quickly reset the path after the handover and reduce the interrupt time of the packet communication (particularly the interrupt time of the QoS path).

In addition to the above-described communication system, in the communication system of the invention, the communication node is near the second access router.
As a result of the configuration, when the mobile terminal is connected to the second access router after the handover, a path passing through the communication node present near the second access router can be set.

In addition to the above-described communication system, in the communication system of the invention, the communication node receives information for identifying the first path and trigger information including at least an address of the communication partner terminal on the first path. The communication node starts the process for establishing the second path based on the trigger information.
As a result of the configuration, the communication node functioning as the proxy can know information required for the process of establishing the second path, a start timing of the process, and the like.

In addition to the above-described communication system, in the communication system of the invention, the mobile terminal transmits the trigger information to the communication node.
As a result of the configuration, the mobile terminal can give an instruction to start the process of establishing the second path and transmit information required to establish the second path to the communication node functioning as the proxy.

In addition to the above-described communication system, in the communication system of the invention, the communication node establishes the second path of which the communication node itself is one end.
As a result of the configuration, the second path is established using the address of the communication node functioning as the proxy without using the address of the mobile terminal.

In addition to the above-described communication system, in the communication system of the invention, the communication node acquires a second address assigned to the mobile terminal that has moved to the second subnet and starts a process for establishing a third path of which one end is the second address of the mobile terminal.
As a result of the configuration, when the communication node functioning as the proxy acquires a new address of the mobile terminal, the communication node can start establishing the third path based on the acquired address.

In addition to the above-described communication system, in the communication system of the invention, the communication node includes an encapsulating means that, when a packet is transferred from the mobile terminal to the communication partner terminal, encapsulates the packet using a header in which the address of the communication node itself is a source address. As a result of the encapsulating means encapsulating the packet sent from the mobile terminal to the communication partner terminal, the packet can receive the additional service provided to the second path until the establishment of the third path is completed.
As a result of the configuration, by the communication node functioning as the proxy encapsulating the packet having a header to which an additional service, such as the QoS guarantee, is not provided, a packet transmission receiving the additional service can be provided. As a result of decapsulation being appropriately performed, the packet can arrive at an appropriate destination.

In addition to the above-described communication system, in the communication system of the invention, the ends of the second path are the communication node and the communication partner terminal. The communication partner terminal includes an encapsulating means that, when a packet is transmitted to the mobile terminal, encapsulates the packet using a header in which an address of the communication node is a destination address. As a result of the encapsulating means encapsulating the packet sent from the communication partner terminal to the mobile terminal, the packet can receive the additional service provided to the second path until the establishment of the third path is completed.
As a result of the configuration, by the communication partner terminal (CN) encapsulating the packet having a header to which the additional service, such as the QoS guarantee, is not provided, the packet transmission receiving the additional service can be provided. As a result of decapsulation being appropriately performed, the packet can arrive at the appropriate destination.

In addition to the above-described communication system, in the communication system of the invention, the ends of the second path are the communication node present near the second access router and a partner-side neighboring communication node present near the communication partner terminal. The partner-side neighboring communication node includes an encapsulating means that, when a packet is transmitted from the communication partner terminal to the mobile terminal, encapsulates the packet using a header in which an address of the communication node is the destination address. As a result of the encapsulating means encapsulating the packet sent from the communication partner terminal to the mobile terminal, the packet can receive the additional service provided to the second path until the establishment of the third path is completed.
As a result of the configuration, by the partner-side neighboring communication node present near the communication partner terminal (CN) encapsulating the packet having a header to which the additional service, such as the QoS guarantee, is not provided, the packet transmission receiving the additional service can be provided. As a result of decapsulation being appropriately performed, the packet can arrive at the appropriate destination. Furthermore, even when the communication partner terminal does not have the additional service function or the encapsulation function, the transmitted packet can receive the additional service.

In addition to the above-described communication system, in the communication system of the invention, when the mobile terminal moves to the second subnet and the establishment of the third path is completed, the first path used in a state in which the mobile terminal is connected to the first subnet and the second path established by the communication node are deleted.
As a result of the configuration, during a transition from the state before the handover to the state after the handover, excess information (such as unnecessary resource reservations) can be prevented from remaining.

In addition to the above-described communication system, in the communication system of the invention, the communication node starts a process of installing a state for routing a signaling message transmitted and received when a process for establishing the second path is performed in an intermediate communication node on a path between the communication node itself and the communication partner terminal.
As a result of the configuration, when the mobile terminal performs the handover, the communication node functioning as the proxy can quickly perform a process of establishing the state for routing the signaling message on a portion of the path, within the resetting of the path after the handover, and reduce the interrupt time of the packet communication (particularly the interrupt time of the QoS path) .

In addition to the above-described communication system, in the communication system of the invention, the communication node transmits identifying information including an address of the communication node itself and an address of the communication partner terminal to the intermediate communication node. The intermediate communication node holds the identifying information and identifies a signaling message having the identifying information.
As a result of the configuration, before the address assigned to the mobile terminal after the handover is acquired, the communication node functioning as the proxy starts the process of establishing the state for routing the signaling message between the communication partner terminal and the communication node.

In addition to the above-described communication system, in the communication system of the invention, when a second address assigned to the mobile terminal that has moved to the second subnet is acquired, the communication node transmits a signaling message including information for providing an additional service related to the second path. The intermediate communication node uses the state for routing the signaling message and transmits the signaling message.
As a result of the configuration, the signaling message including information for providing the additional service can be transmitted using the state for routing the signaling message established before the address assigned to the mobile terminal after the handover is acquired. A new path (particularly the QoS path) can be quickly established.

In addition to the above-described communication system, the communication system of the invention is applied when the additional service is the QoS guarantee.

To achieve the objects, a resource management device of the invention is a resource management device within a communication node present in a communication network. A plurality of access routers respectively forming a subnet are connected via the communication network and a path for providing an additional service for communication between arbitrary communication terminals via the communication network can be established. The resource management device includes a resource securing means, a trigger receiving means, and a message generating means. The resource securing means secures a resource for providing the additional service on the path. The trigger receiving means receives trigger information including at least information identifying a first path and an address of a communication partner terminal on the first path. The first path is used to provide the additional service for communication between the mobile terminal and the communication partner terminal. The mobile terminal is connected to a first access router that is one access router among the plurality of access routers. The communication partner terminal is connected to the communication network and serves as a communication partner of the mobile terminal. When the trigger information receiving means receives the trigger information, the message generating means generates a message for starting a process of establishing a second path based on the trigger information. The second path is used to provide the additional service for communication between the mobile terminal in a state connected to a second access router differing from the first access router and the communication partner terminal.
As a result of the configuration, when the mobile terminal performs the handover, the communication node functioning as the proxy can more quickly reset the path after the handover and reduce the interrupt time of the packet communication (particularly the interrupt time of the QOS path).

In addition to the above-described resource management device, in the resource management device of the invention, information indicating that path setting is performed as a proxy of the mobile terminal is added to the message.
As a result of the configuration, that a resource reservation related to the message, described above, is made by a proxy can be disclosed to each QNE on the path.

In addition to the above-described resource management device, the resource management device of the invention is disposed within the communication node present near the second access router.
As a result of the configuration, when the mobile terminal is connected to the second access router after the handover, a path passing through the communication node present near the second access router can be set.

In addition to the above-described resource management device, in the resource management device of the invention, the trigger information includes at least information identifying the first path and an address of the communication partner terminal on the first path.
As a result of the configuration, the communication node functioning as the proxy can know information required for the process for establishing the second path and a start timing of the process.

In addition to the above-described resource management device, in the resource management device of the invention, the trigger information is received from the mobile terminal.
As a result of the configuration, the mobile terminal can give an instruction to start the process of establishing the second path and transmit information required to establish the second path to the communication node functioning as the proxy.

In addition to the above-described resource management device, the resource management device of the invention establishes the second path of which one end is the communication node.
As a result of the configuration, the second path can be established using the address of the communication node functioning as the proxy without using the address of the mobile terminal.

In addition to the above-described resource management device, the resource management device of the invention acquires the second address assigned to the mobile terminal that has moved to the second subnet and establishes a third path in which one end is the second address of the mobile terminal.
As a result of the configuration, when the communication node functioning as the proxy acquires the new address of the mobile terminal, an establishment of the third path is started based on the address.

In addition to the above-described resource management device, the resource management device of the invention has an encapsulating means that, when a packet is transferred from the mobile terminal to the communication partner terminal, encapsulates the packet using a header in which the address of the communication node itself is a source address. As a result of the encapsulating means encapsulating the packet sent from the mobile terminal to the communication partner terminal, the packet can receive the additional service provided to the second path until the establishment of the third path is completed.
As a result of the configuration, by the communication node functioning as the proxy encapsulating the packet having a header to which the additional service, such as the QoS guarantee, is not provided, a packet transmission receiving the additional service can be provided. As a result of decapsulation being appropriately performed, the packet can arrive at the appropriate destination.

In addition to the above-described resource management device, the resource management device of the invention transmits a message for deleting the second path when the mobile terminal moves to the second subnet and the establishment of the third path is completed.
As a result of the configuration, during the transition from the state before the handover to the state after the handover, excess information (such as unnecessary resource reservations) can be prevented from remaining.

In addition to the above-described resource management device, in the resource management device of the invention, the additional service is the QoS guarantee.

To achieve the objects, a resource management method of the invention is a resource management method performed within a communication node present in a communication network. A plurality of access routers respectively forming a subnet are connected via the communication network, and a path for providing an additional service for communication between arbitrary communication terminals via the communication network can be established. The resource management method includes a resource securing step, a trigger receiving step, and a message generating step. In the resource securing step, a resource for providing the additional service is secured on the path. At the trigger receiving step, trigger information including at least information identifying a first path and an address of a communication partner terminal on the first path is received.
The first path is used to provide the additional service for communication between the mobile terminal and the communication partner terminal. The mobile terminal is connected to a first access router that is one access router among the plurality of access routers. The communication partner terminal is connected to the communication network and serves as a communication partner of the mobile terminal. When the trigger information is received at the trigger information receiving step, at the message generating step, a message for starting a process of establishing a second path is generated based on the trigger information. The second path is used to provide the additional service to communication between the mobile terminal in a state connected to a second access router differing from the first access router and the communication partner terminal.
As a result of the configuration, when the mobile terminal performs the handover, the communication node functioning as the proxy can more quickly reset the path after the handover and can reduce the interrupt time of the packet communication (particularly the interrupt time of the QOS path).

In addition to the above-described resource management method, in the resource management method of the invention, information indicating that path setting is performed as a proxy of the mobile terminal is added to the message.
As a result of the configuration, that a resource reservation related to the message, described above, is made by a proxy can be disclosed to each QNE on the path.

In addition to the above-described resource management method, the resource management method of the invention is performed in the communication node present near the second access router.
As a result of the configuration, when the mobile terminal is connected to the second access router after the handover, a path passing through the communication node present near the second access router can be set.

In addition to the above-described resource management method, in the resource management method of the invention, the trigger information includes at least information identifying the first path and an address of the communication partner terminal on the first path.
As a result of the configuration, the communication node functioning as the proxy can know information required for the process of establishing the second path and a start timing of the process.

In addition to the above-described resource management method, in the resource management method of the invention, the trigger information is received from the mobile terminal.
As a result of the configuration, the mobile terminal can give an instruction to start the process of establishing the second path and transmit information required to establish the second path to the communication node functioning as the proxy.

In addition to the above-described resource management method, in the resource management method of the invention, the second path in which one end is the communication node is established.
As a result of the configuration, the second path can be established using the address of the communication node functioning as the proxy without using the address of the mobile terminal.

In addition to the above-described resource management method, in the resource management method of the invention, the second address assigned to the mobile terminal that has moved to the second subnet is acquired and a third path in which one end is the second address of the mobile terminal is established.
As a result of the configuration, when the communication node functioning as the proxy acquires the new address of the mobile terminal, an establishment of the third path is started based on the address.

In addition to the above-described resource management method, the resource management method of the invention has an encapsulating step of, when a packet is transferred from the mobile terminal to the communication partner terminal, encapsulating the packet using a header in which the address of the communication node itself is a source address. As a result of the packet sent from the mobile terminal to the communication partner terminal being encapsulated at the encapsulating step, the packet can receive the additional service provided to the second path until the establishment of the third path is completed.
As a result of the configuration, by the communication node functioning as the proxy encapsulating the packet having a header to which the additional service, such as the QoS guarantee, is not provided, a packet transmission receiving the additional service can be provided. As a result of decapsulation being appropriately performed, the packet can arrive at the appropriate destination.

In addition to the above-described resource management method, in the resource management method in the invention, a message is transmitted for deleting the second path when the mobile terminal moves to the second subnet and establishment of the third path is completed.
As a result of the configuration, during the transition from the state before the handover to the state after the handover, excess information (such as unnecessary resource reservations) can be prevented from remaining.

In addition to the above-described resource management method, in the resource management method in the invention, the additional service is the QoS guarantee.

To achieve the objects, a communication management device of the invention is a communication management device within a communication node that, in communication performed between two communication nodes using a communication protocol including a first unit having a function for routing a signaling message and a second unit having a function for managing information related to a provided additional service, is present on a path between the two communication nodes and provides the additional service to a data packet transmitted between the two communication nodes. The communication management device includes a state managing means and a filter information managing means. In the state managing means, the first unit manages a state for routing the signaling message transmitted in a portion of a path that is between the two communication nodes and has arbitrary end points including the communication node itself. In the filter information managing means, the second unit manages filter information transmitted by the signaling message and used to identify the data packet to which the additional service is to be provided.
As a result of the configuration, interdependency between a mechanism for establishing the state for routing the signaling message when the path related to the additional service (particularly the QoS) is established and a mechanism for making a resource reservation to provide the data packet with the additional service can be reduced and path management can be facilitated.

In addition to the above-described communication management device, in the communication management device according to the invention, the state includes addresses of the arbitrary end points and the filter information includes addresses of the two communication nodes.
As a result of the configuration, different addresses can be respectively set regarding information for routing the signaling message and information for identifying the data packet to which the additional service is provided. The interdependency between the mechanism for establishing the state for routing the signaling message when the path related to the additional service (particularly the QoS) is established and the mechanism for making a resource reservation to provide the data packet with the additional service can be reduced. In particular, the process for establishing the state for routing can be flexibly performed.

In addition to the above-described communication management device, in the communication management device according to the invention, the first unit is disposed in a NTLP layer in a NSIS and the second unit is disposed in a NSLP layer in a NSIS.
As a result of the configuration, flow ID and the filter information can be separately managed. Interdependency between a process related to a path through which the signaling message passes and a process related to a path through which the data packet passes can be reduced. In the NSIS, the interdependency between the mechanism for establishing the state for routing the signaling message when the path related to the additional service (particularly the QoS) is established and the mechanism for making a resource reservation to provide the data packet with the additional service can be reduced. In particular, the process for establishing the state for routing can be flexibly performed.

To achieve the objects, a communication management method of the invention is a communication management method performed within a communication node that, in a communication performed between two communication nodes using a communication protocol including a first unit having a function for routing a signaling message and a second unit having a function for managing information related to a provided additional service, is present on a path between the two communication nodes and provides the additional service to a data packet transmitted between the two communication nodes. The communication management method includes a state managing step and a filter information managing step. At the state managing step, the first unit manages a state for routing the signaling message transmitted in a portion of a path that is between the two communication nodes and has arbitrary end points including the communication node itself. At the filter information managing step, the second unit manages filter information transmitted by the signaling message and used to identify the data packet to which the additional service is to be provided.
As a result of the configuration, interdependency between a mechanism for establishing the state for routing the signaling message when the path related to the additional service (particularly the QoS) is established and a mechanism for making a resource reservation to provide the data packet with the additional service can be reduced and path management can be facilitated.

In addition to the above-described communication management method, in the communication management method according to the invention, the state includes addresses of the arbitrary end points and the filter information includes addresses of the two communication nodes.
As a result of the configuration, different addresses can be respectively set regarding information for routing the signaling message and information for identifying the data packet to which the additional service is provided. The interdependency between the mechanism for establishing the state for routing the signaling message when the path related to the additional service (particularly the QoS) is established and the mechanism for making a resource reservation to provide the data packet with the additional service can be reduced. In particular, a process for establishing the state for routing can be flexibly performed.

In addition to the above-described communication management method, in the communication management method according to the invention, the first unit is disposed in a NTLP layer in a NSIS and the second unit is disposed in a NSLP layer in a NSIS.
As a result of the configuration, flow ID and the filter information can be separately managed. Interdependency between the process related to a path through which the signaling message passes and the process related to a path through which the data packet passes can be reduced. In the NSIS, the interdependency between the mechanism for establishing the state for routing the signaling message when the path related to the additional service (particularly the QoS) is established and the mechanism for making a resource reservation to provide the data packet with the additional service can be reduced. In particular, the process for establishing the state for routing can be flexibly performed.

In addition to the above-described communication management method, in the communication management method according to the invention, the first unit and the second unit are disposed in the NTLP layer in the NSIS.
As a result of the configuration, the flow ID and the filter information can be separately managed. The interdependency between the process related to a path through which the signaling message passes and the process related to a path through which the data packet passes can be reduced.

In addition to the above-described communication management method, in the communication management method according to the invention, the first unit is disposed in a NTLP layer in the NSIS and the second unit is disposed in a NSLP shared section that can be referenced by an arbitrary function on the NTLP layer in the NSIS.
As a result of the configuration, the flow ID and the filter information can be separately managed. The interdependency between the process related to a path through which the signaling message passes and the process related to a path through which the data packet passes can be reduced.

In addition to the above-described communication management method, in the communication management method according to the invention, the first unit is disposed in a NTLP layer in the NSIS and the second unit is disposed in a certain function section in a NSLP layer in the NSIS. A portion or all of the filter information is passed from the certain function section to an arbitrary function section in the NSLP layer.
As a result of the configuration, the flow ID and the filter information can be separately managed. The interdependency between the process related to a path through which the signaling message passes and the process related to a path through which the data packet passes can be reduced.

The invention has the above-described configuration. The additional service (particularly the QoS) is provided to the packet in which the mobile terminal after the handover is set as the source or the destination, without use of the address (NCOA) used in the subnet to which the mobile terminal is connected after the handover. As a result, a smooth path (particularly the QoS path) establishment that is not affected by a generation timing or an acquisition mechanism of the NCoA of the mobile terminal or the like can be realized.

In addition, the invention has the above-described configuration. The interdependency between the mechanism for establishing the state for routing the signaling message when the path related to the additional service (particularly the QoS) is established and the mechanism for making a resource reservation to provide the data packet with the additional service can be reduced. As a result, a smooth path (particularly the QoS path) establishment that is not affected by a generation timing or an acquisition mechanism of the NCoA of the mobile terminal or the like can be realized. Moreover, path (particularly the QoS path) management can be facilitated even when communication is performed using a plurality of IP addresses or a plurality of port numbers, or when a change occurs in an IP address or a port number during a session.

### BRIEF DESCRIPTION OF THE DRAWINGS

Fig. 1 is a diagram schematically showing a state of a QoS path before a subset to which an MN is connected is changed in a communication system according to a first embodiment of the present invention;
Fig. 2 is a diagram schematically showing a state in which a QNE to become a proxy of the MN establishes a predictive path in the communication system according to the first embodiment of the invention;
Fig. 3 is a diagram schematically showing a state in which the MN moves to a new subset and a new QoS path is established between the MN and a CN in the communication system according to the first embodiment of the invention;
Fig. 4 is a diagram of a configuration example of the QNE according to the first embodiment of the invention;
Fig. 5 is a sequence chart of an operation example according to the first embodiment of the invention;
Fig. 6 is a diagram schematically showing a state of a QoS path before a subset to which an MN is connected is changed in a communication system according to a second embodiment of the present invention;
Fig. 7 is a diagram schematically showing a state in which a QNE that is a proxy of the MN establishes a predictive path in the communication system according to the second embodiment of the invention;
Fig. 8 is a diagram schematically showing a state in which the MN moves to a new subset and a new QoS path is established between the MN and a CN in the communication system according to the second embodiment of the invention;
Fig. 9 is a sequence chart of an operation example according to the second embodiment of the invention;
Fig. 10 is a schematic diagram explaining a NSIS protocol configuration according to a conventional technology;
Fig. 11 is a schematic diagram explaining a concept in which an NE and a QNE that are NSIS nodes are "adjacent" according to the conventional technology;
Fig. 12 is a diagram schematically showing a state of a QoS reservation before a subset to which a MN is connected is changed and a state of a flow ID included within a state for routing in a communication system according to a third embodiment of the invention;
Fig. 13 is a diagram schematically showing a state in which a QNE that is a proxy of the MN establishes the state for routing on a predictive path for the MN by indicating the flow ID included in the state in a communication system according to the third embodiment of the invention;
Fig. 14 is a diagram schematically showing a state in which the MN moves to a new subset and a new QoS path is established between the MN and a CN in a communication system according to the third embodiment of the invention;
Fig. 15 is a sequence chart of an operation example when a transmission direction of a data packet is an uplink direction according to the third embodiment of the invention;
Fig. 16 is a sequence chart of an operation example when the transmission direction of the data packet is a downlink direction according to the third embodiment of the invention;
Fig. 17 is a diagram schematically showing a main body managing filter information and flow ID within the QNE according to the third embodiment of the invention; and
Fig. 18 is a sequence chart of an operation example when a NATFW is present on a data path and the transmission direction of the data packet is the uplink direction according to the third embodiment of the invention.

### BEST MODE OF CARRYING OUT THE INVENTION

Hereinafter, a first embodiment to a third embodiment of the present invention will be described with reference to the accompanying diagrams. First, when a direction of data flow is a direction from a moving MN toward a CN that is a communication partner of the MN (referred to, hereinafter, as an uplink direction) will be described, according to the first embodiment of the invention. Then, when the direction of the data flow is from the CN towards the MN (referred to, hereinafter, as a downlink direction) will be described, according to a second embodiment of the invention.

### <First Embodiment>

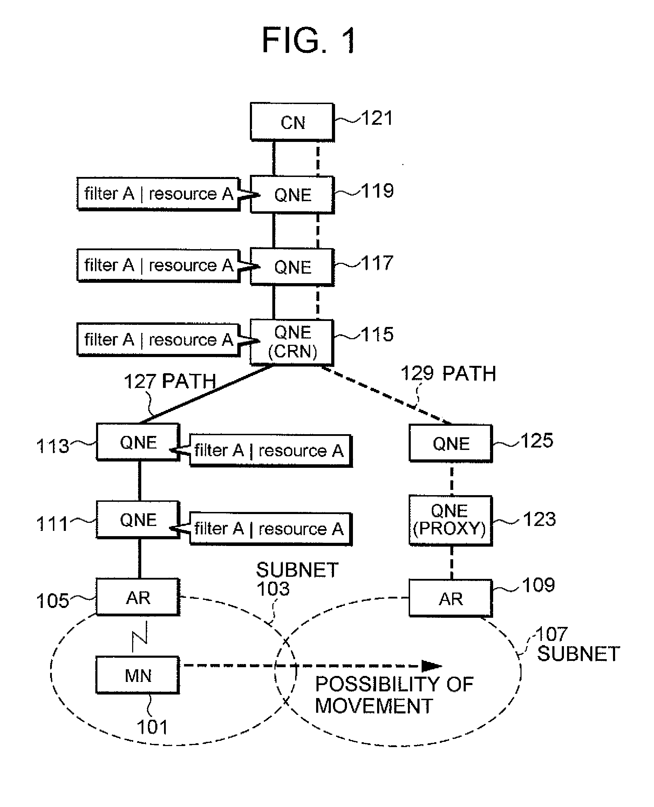

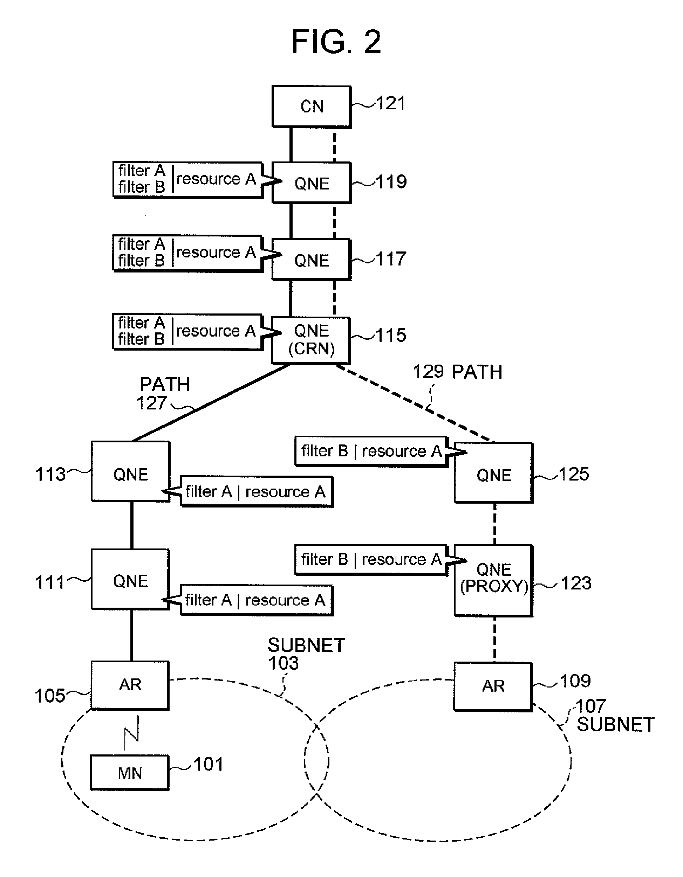

Hereafter, the first embodiment of the invention will be described. First, an overview according to the first embodiment of the invention will be described with reference to Fig. 1 to Fig. 3. Fig. 1 is a diagram schematically showing a state of a QoS path before a subset to which an MN is connected is changed in a communication system according to the first embodiment of the present invention. Fig. 2 is a diagram schematically showing a state in which a QNE to become a proxy of the MN establishes a predictive path in the communication system according to the first embodiment of the invention.

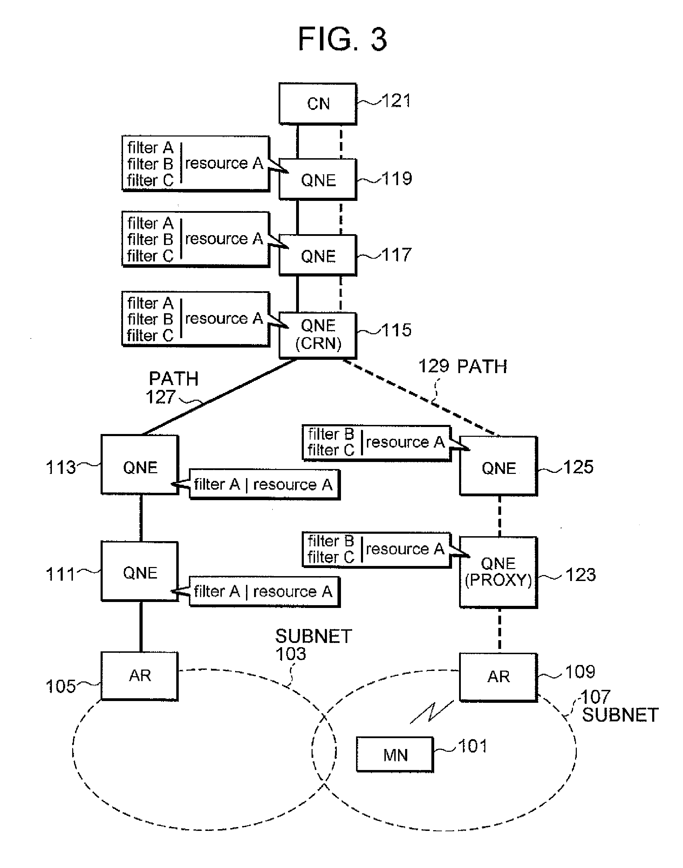

Fig. 3 is a diagram schematically showing a state in which the MN moves to the new subset and a new QoS path is established between the MN and a CN in the communication system according to the first embodiment of the invention.

Fig. 1 to Fig. 3 show a MN 101, a CN 121, an access router (AR) 105, an AR 109, a QNE 111, a QNE 113, a QNE 115, a QNE 117, a QNE 119, a QNE 123, and a QNE 125. The MN 101 connects to an AR and communicates with the CN 121 through wireless communication. The CN 121 becomes the communication partner of the MN 101. The AR 105 forms a subnet 103. The AR 109 forms a subnet 107. The QNE 111, the QNE 113, the QNE 115, the QNE 117, the QNE 119, the QNE 123, and the QNE 125 are provided on a path between the MN 101 and the CN 121 and have a QoS awareness function (QoS-aware) . The QoS-aware guarantees QoS regarding a packet transmitted between the MN 101 and the CN 121.

When the MN 101 is present in the subnet 103 (in other words, when the MN 101 is connected to the AR 105), the AR 105, the QNE 111, the QNE 113, the QNE 115, the QNE 117, and the QNE 119 are present on an uplink-direction path 127 from the MN 101 to the CN 121. When the MN 101 is present in the subnet 107 (in other words, when the MN 101 is connected to the AR 109), the AR 109, the QNE 123, the QNE 125, the QNE 115, the QNE 117, and the QNE 119 are present on an uplink-direction path 129 from the MN 101 to the CN 121. The path 127 and the path 129 partially overlap. A crossover node (CRN) between the path 127 and the path 129 is the QNE 115 .

In Fig. 1, a data packet transmitted from the MN 101 to the CN 121 is transmitted via the path 127. At this time, all QNE 111, QNE 113, QNE 115, QNE 117, and QNE 119 have a QoS state related to the data packet to be transmitted from the MN 101 to the CN 121. In other words, each QNE 111, QNE 113, QNE 115, QNE 117, and QNE 119 holds the QoS state in which identifying information (referred to as filter information) and resource reservation information corresponding to the filter information are correlated. The identifying information includes information on at least a source address and a destination address. The QNE 111, the QNE 113, the QNE 115, the QNE 117, and the QNE 119 are configured to identify the filter information with reference to a header (particularly the source address and the destination address) of the data packet transmitted from the MN 101 to the CN 121 and guarantee the QoS based on the corresponding resource reservation information. A current flow ID in the above-mentioned Non-patent Document 4, Non-patent Document 6, Non-patent Document 7, and the like is described to be formed from information including the source address and the destination address of the data packet. The flow ID can be used as the filter information. The filter information can also be information other than the flow ID.

As shown in Fig. 1, the filter information of the path 127 (the filter information including an IP address [current care-of address {cCoA} assigned to the MN 101 from the subnet 103 as the source address and the IP address of the CN 121 as the destination address) is a filter A. The resource reservation information corresponding to the filter A is a resource A.

The MN 101 may possibly move to the subnet 107. The MN 101 requests a proxy 123 to establish a predictive path (the path 129) or a portion of the predictive path. The proxy 123 establishes the predictive path or the portion of the predictive path before the MN 101 moves to the subnet 107. As a result, after the MN 101 actually moves to the subnet 107, a QoS path from the MN 101 to the CN 121 is established more quickly. An interrupt time of a QoS guarantee caused by a handover can be shortened.

When a QNE (proxy) 123 receives a trigger of some kind to establish the predictive path, the QoS path is established between the QNE (proxy) 123 and the CRN (here, the QNE 115). When the new path is established, the QNE (proxy) 123 and each intermediate QNE (such as QNE 125) between the QNE (proxy) 123 and the QNE 115 have a new QoS state. In other words, as shown in Fig. 2, in the QNE (proxy) 123 and the QNE 125, the resource A that is the same resource reservation information as that of the filter A is set for filter information (filter B) including the IP address of the QNE (proxy) 123 as the source address and including the IP address of the CN 121 as the destination address.

At the same time, regarding QNE on the path between the QNE 115 and the CN 121, the new filter information (the above-described filter B) is added to the current filter information (the filter A). As a result, as shown in Fig. 2, the QNE 115 and each intermediate QNE (such as the QNE 117 and the QNE 119 between the QNE 115 and the CN 121 have a QoS state in which the resource A is set for the filter A and the filter B. The resource A reserved for data traffic defined by the filter A can be used for data traffic defined by the filter B. For example, there is a possibility of a problem occurring in an operation according to the invention as a result of a conventionally-performed process, such as two pieces of filter information (the filter A and the filter B) having the same session ID deleting either one of the two pieces of filter information. Therefore, for example, a special flag (a "proxy flag") indicating the establishment of the QoS path by a proxy is preferably added to a RESERVE message related to the filter B.

As described above, before the MN 101 moves to the subnet 107 (or unrelated to the movement of the MN 101 to the subnet 107), the QNE (proxy) 123 can make the resource reservation related to a portion of the path used after the MN 101 is connected to the subnet 107 (the path from the QNE [proxy]123 to the CN 121) without the use of a NCoA (a new CoA assigned after the MN 101 has moved to the subnet 107) of the MN 101 (the state shown in Fig. 2).

Then, when the MN 101 acquires the NCoA (when the MN 101 actually moves to the subnet 107 and acquires the NCoA or when the MN 101 acquires the NCoA while being connected to the subnet 103), new filter information (filter C) is added to the filter A or the filter B in each intermediate QNE (the QNE 123, the QNE 125, the QNE 115, the QNE 117, and the QNE 119) on the path 129, as shown in Fig. 3. The filter C includes the NCoA of the MN 101 as the source address and the IP address of the CN 121 as the destination address. As a result, the QoS path is updated. When the MN 101 moves to the subnet 107, the filter A is preferably actively (for example, by transmission of a message instructing deletion) or passively (for example, by time-out) deleted. When the filter information is present as information differing from the flow ID, the flow ID does not need to be dependent on the source address/destination address of the data packet. For example, when the proxy 123 performs the resource reservation related to the filter C in Fig. 3, the flow ID used over the entire path 129 can include "source = QNE (proxy) 123 and destination = CN 121". Alternatively, the path 129 can be handled as two paths respectively using a flow ID including "source = QNE (proxy) 123 and destination = MN 101" regarding the path from the MN 101 to the QNE (proxy) 123 and a flow ID including "source = QNE (proxy) 123 and destination = CN 121" regarding the path from the QNE (proxy) 123 to the CN 123.

For example, after the MN 101 moves to the subnet 107 and acquires the NCoA, an outer header including the filter B information (a header in which the source address is the IP address of the QNE [proxy] 123 and the destination address is the IP address of the CN 121) is added to the data packet transmitted from the MN 101 to the CN 121 and the data packet is encapsulated by the QNE (proxy) 123, until the update of the QoS path related to the NCoA is completed (the resource reservation related to the filter C is completed). The encapsulated data packet is identified by the filter B. The QoS of the data packet is guaranteed based on the resource A in each intermediate QNE, and the data packet is transmitted. The data packet is decapsulated by a last QNE on the path identified by the filter B. The last QNE is preferably the CN 121. However, when the CN 121 is not a QNE, the last QNE can be another QNE (such as the QNE 119 closest to the CN 121 on the path).

Upon arrival of the packet having the header identified by the filter B, the last QNE decapsulates the packet and extracts an inner packet. When the CN 121 is the last QNE, the CN 121 acquires the inner packet. When the QNE 119 is the last QNE, the QNE 119 transfers the inner packet to the CN 121. As a method for making the QOS reservation over the entire path, it is clear to a person skilled in the art that there are methods other than the above-described method of encapsulating the packet, such as minimal encapsulation within IPv4. An arbitrary packet encapsulation method can be applied to the invention. The invention favorably operates in other types of encapsulating and tunneling mechanisms.

In this way, the data packet is encapsulated until the resource reservation related to the filter C in which the NCoA of the MN 101 is set is completed. The QoS of the encapsulated data packet is guaranteed by the filter B in which the IP address of the QNE (proxy) 123 is set as the source address. The interrupt time of the QoS guarantee until the resource reservation is made using the NCoA of the MN 101 can be shortened.

After the QoS is successfully updated with the filter C (in other words, after the filter C is added to all QNE on the route 129), the QNE (proxy) 123 completes the generation of the filter B data packet (encapsulation of the filter A data packet) . Then, the filter A and the filter B are actively or passively deleted. Only the QoS state related to the filter C ultimately remains. On the route 129 from the MN 101, connected to the subnet 107, to the CN 121, the QoS of the data packet from the MN 101 to the CN 121 is guaranteed.

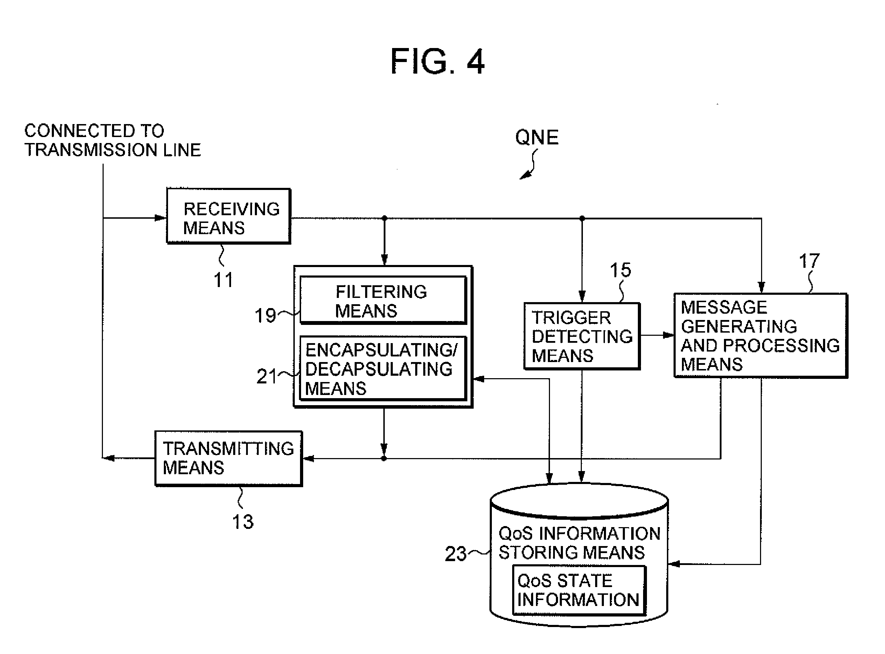

Next, a configuration of the QNE according to the first embodiment of the invention will be described with reference to Fig. 4. Fig. 4 is a diagram of a configuration example of the QNE according to the first embodiment of the invention.
The QNE shown in Fig. 4 includes a receiving means 11, a transmitting means 13, a trigger detecting means 15, a message generating and processing means 17, a filtering means 19, an encapsulating/decapsulating means 21, and a QoS information storing means 23.

The receiving means 11 and the transmitting means 13 perform packet reception and packet transmission. The trigger detecting means 15 performs a process related to a trigger of some kind to establish the predictive path received from, for example, the MN 101. The received trigger information is, for example, correlated with each piece of filter information and stored in the QoS information storing means 23. In addition, the trigger detecting means 15 provides information giving notification of a generation of a trigger information reception event and the trigger information itself to the message generating and processing means 17.

The message generating and processing means 17 generates messages for performing research on each communication node on the data path, actual resource reservation, and the like, based on information such as the session ID, QSpec information, the IP address of the CN 121, and the like included in the trigger information and used in the QoS path from the MN 101 to the CN 121. The message generating and processing means 17 performs processing regarding a message received from another communication node, as well. The information (such as the session ID, the filter information, and the QSpec) used to perform the resource reservation and the like are stored in the QoS information storing means 23.

The filtering means 19 performs packet filtering on a received packet, based on the QoS information (QoS state) stored in the QoS information storing means 23, with reference to the header of the received packet (particularly the source address and the destination address of the packet corresponding to the filter information) . As a result of the filtering, resources can be secured for each packet. The encapsulating/decapsulating means 21 encapsulates a transmitted packet and decapsulates the received packet as required.

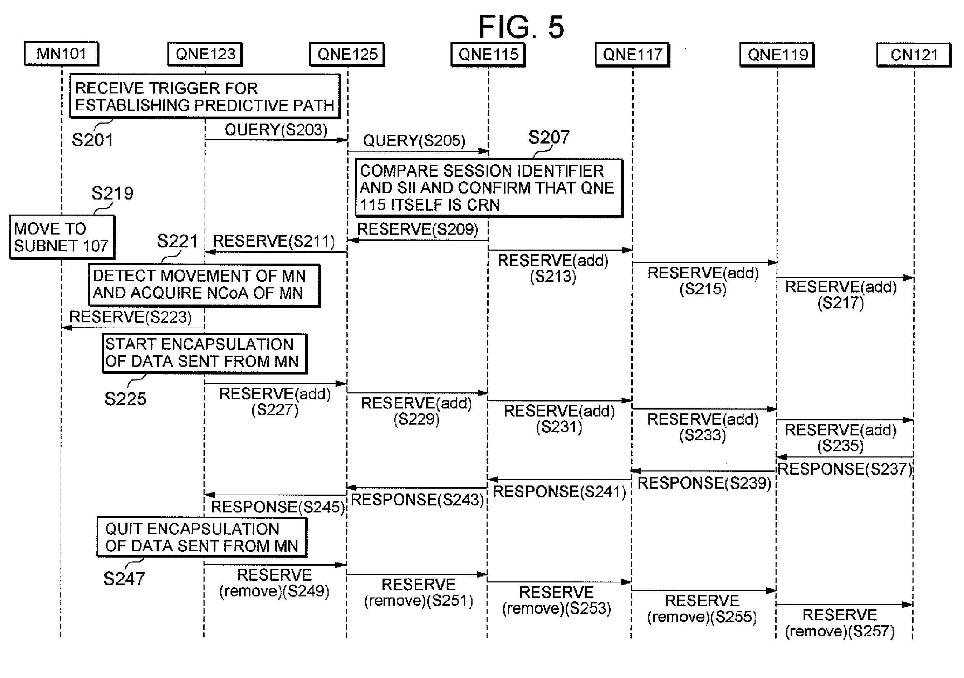

As is clear from a specific example described hereafter (with reference to a sequence chart in Fig. 5), the trigger detecting means 15 is required in only the QNE 123. The trigger detecting means 15 is not required to be included in other QNE. Regarding the encapsulating/decapsulating means 21, for example, it is only required that an encapsulating means is included in the QNE 123 and the decapsulating means is included in the CN 121, respectively.
The encapsulating/decapsulating means 21 is not particularly required to be included in the other QNE.

Next, an operation according to the first embodiment of the invention will be described with reference to Fig. 5. Fig. 5 is a sequence chart of an operation example according to the first embodiment of the invention. Here, as a specific example, when information required for the operation of the invention is further added to a QUERY message and the RESERVE message will be described. The QUERY message and the RESERVE message are messages defined by the QoS NSLP of the NSIS.

In Fig. 5, first, the QNE (proxy) 123 receives a trigger to establish the predictive path (Step S201). The trigger includes information required to establish the predictive path, such as the session ID, the QSpec information, and the IP address of the CN 121 (or a QoS NSIS responder [QNR] that is the last QNE on the route) used in the QoS path between the MN 101 and the CN 121. The source of the trigger received by the QNE (proxy) 123 can be an arbitrary QNE. However, the source is preferably the MN 101 that may possibly move, the CN 121 that is the communication partner node of the MN 101, or a QNE that functions as a proxy of the MN 101 and the CN 121 depending on requests from the MN 101 and the CN 121. In this case, the QNE serving as the proxy of the MN 101 and the CN 121 is required to know the IP address of the QNE (proxy) 123 to be used as the destination of the trigger. However, the method by which the QNE knows the IP address is not particularly limited.

The QNE (proxy) 123 that has received the trigger immediately transmits the QUERY message corresponding to the trigger towards the CN 121 (Step S203). For example, the session ID and the QSpec information are included in the QUERY message. The QUERY message arrives at the QNE 125 that is adjacent to the QNE (proxy) 123 on the path 129. The QNE 125 performs a normal QUERY process (for example, a confirmation process of the resource reservation state of the session ID included in the QUERY message) based on the QUERY message. In addition, the QNE 125 transmits the QUERY message to a next adjacent QNE (the QNE 115) (Step S205). Upon receiving the QUERY message, the QNE 115 compares the session ID within the QUERY message and source identification information (SII) used as information for detecting a change to an adjacent QNE. As a result, the QNE 115 confirms that the QNE 115 itself is the CRN (Step S207).

The QNE 115 transmits a receiver-initiated RESERVE message to which the "proxy flag" is added to make a new reservation (Step S209). The filter information of the reservation includes the IP address of the QNE (proxy) 123 as the source address (corresponding to the filter B in Fig. 2) . The RESERVE message transmitted from the QNE 115 at Step S209 is transmitted to the QNE 123 (Step S211). At each QNE (the QNE 123 and the QNE 125), a filter/resource pair is generated and the reservation is made based on the filter information and the QSpec included in the RESERVE message. The filter/resource pair is similarly generated (the filter B/resource A in Fig. 2) and the reservation is similarly made at QNE 115, as well.

Simultaneously with the transmission of the receiver-initiated RESERVE message at Step S209, the QNE 115 transmits a sender-initiated RESERVE message (written as RESERVE(add) in Fig. 5) to which the "proxy flag" is added to the CN 121 (Step S213). The filter information of the reservation includes the IP address of the QNE (proxy) 123 as the source address (corresponding to the filter B in Fig. 2) . The RESERVE message transmitted from the QNE 115 at Step S213 is transmitted to the CN 121 (Step S213, Step S215, and Step S217). At each QNE (the QNE 117 and the QNE 119), the filter information is added to a current filter/resource pair (the filter A/resource A in Fig. 1) currently being used for the data packet sent from the MN 101 to the CN 121.

Here, the MN 101 moves to the subnet 107 (Step S219). The QNE (proxy) 123 detects the movement of the MN 101. When the NCoA of the MN 101 is acquired (Step S221), the QNE (proxy) 123 transmits the receiver-initiated RESERVE message to the MN 101 (Step S223). The filter information related to the RESERVE message includes the NCoA of the MN 101 as the source address.

When the data packet addressed to the CN 121 is received from the MN 101, the QNE (proxy) 123 starts encapsulating the data packet from the MN 101 by adding the outer header in which the source address is set to the address of the QNE (proxy) 123 (the destination address is the address of the CN 121) (Step S225) . The source address of the encapsulated data packet is the QNE (proxy) 123. The QoS treatment according to the filter information of the filter B is performed at each QNE on the route 129. As a result, the QOS is guaranteed.

At the same time, the QNE (proxy) 123 transmits the sender-initiated RESERVE message (written as RESERVE(add) in Fig. 5) to make a reservation related to the MN 101 after the movement to the subnet 107 (in other words, the NCoA of the MN 101) (Step S227). In the filter information of the reservation, the IP address of the MN 101 is included as the source address. The RESERVE message is transmitted via each QNE (the QNE 125, the QNE 115, the QNE 117, and the QNE 119) (Step S229, Step S231, Step S233, and Step S235). At each QNE, the filter information (filter C in Fig. 3) included in the RESERVE message is added to the filter information (filter B in Fig. 2) that has been added or generated earlier.

The CN 121 that has received the RESERVE message immediately transmits a RESPONSE message toward the QNE 123 (Step S237). The RESPONSE message arrives at the QNE (proxy) 123 via each QNE (the QNE 119, the QNE 117, the QNE 115, and the QNE 125) (Step S239, Step S241, Step S243, and Step S245) . As a result of the reception of the RESPONSE message, the QNE (proxy) 123 confirms that the QoS path related to the NCoA of the MN 101 is established and the QNE (proxy) 123 quits the encapsulation of the data packet (Step S247).

Furthermore, the QNE 123 transmits a sender-initiated RESERVE message (written as RESERVE(remove) in Fig. 5) to the CN 121 to delete the filter information (the filter B in Fig. 2) in which the QNE (proxy) 123 employed at Step S209 to Step S217 is the source address (Step S249, Step S251, Step S253, Step S255, and Step S257). The deletion of the filter information by the RESERVE message is not necessarily required to be performed. The filter information can be deleted by a timer timing out.

As described above, according to the first embodiment, the QNE (proxy) 123 makes the resource reservation related to a portion (a path from the QNE [proxy] 123 to the CN 121) of a path (a path from the MN 101 to the CN 121) used after the MN 101 is connected to the subnet 107, without using the NCoA of the MN 101 assigned in the subnet 107. Until a complete path from the MN 101 to the CN 121 is established, transmission of the data packet is performed by the path established by the QNE (proxy) 123 and QoS state. As a result, when the MN 101 changes the connection from the subnet 103 to the subnet 107, the interrupt time of the QoS guarantee of the data packet transmitted from the MN 101 to the CN 121 can be shortened.

### <Second Embodiment>

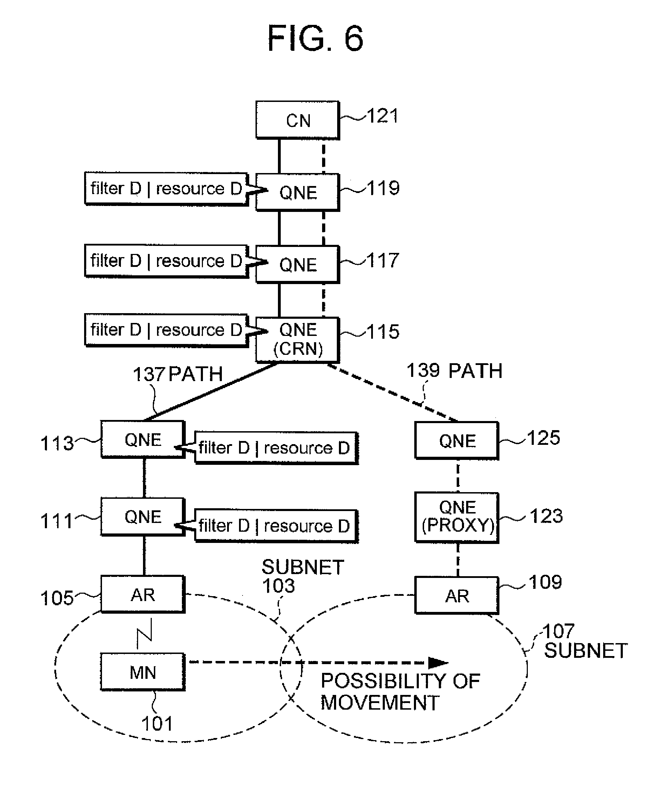

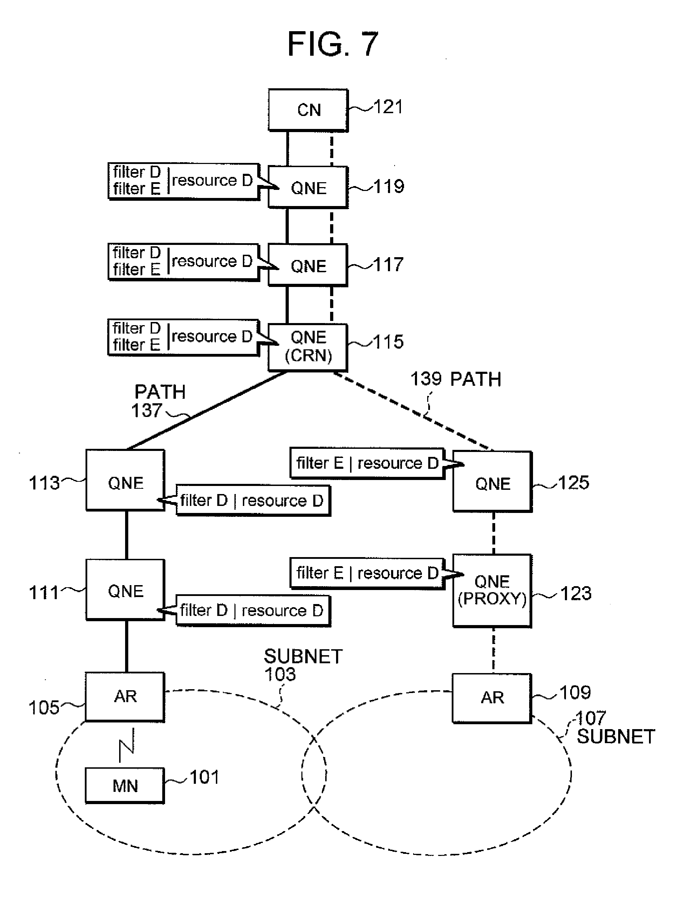

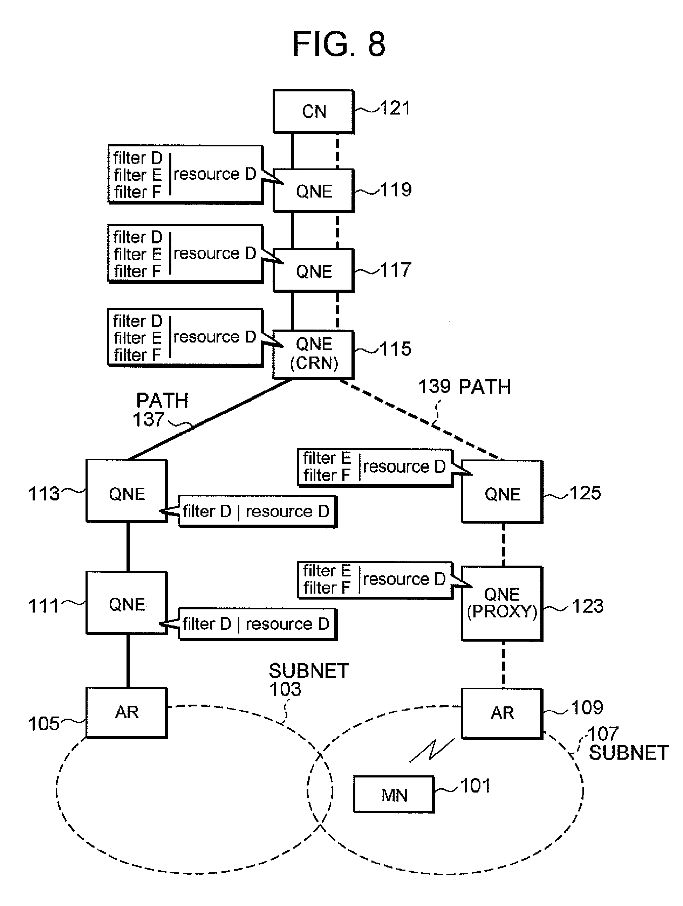

Next, the second embodiment of the invention will be described. First, an overview according to the first embodiment of the invention will be described with reference to Fig. 6 to Fig. 8. Fig. 6 is a diagram schematically showing the state of the QoS path before the subset to which the MN is connected is changed in a communication system according to the second embodiment of the invention. Fig. 7 is a diagram schematically showing a state in which a QNE that is the proxy of the MN establishes the predictive path in the communication system according to the second embodiment of the invention. Fig. 8 is a diagram schematically showing a state in which the MN moves to a new subset and a new QoS path is established between the MN and the CN in the communication system according to the second embodiment of the invention.

As does Fig. 1 to Fig. 3, Fig. 6 to Fig. 8 shows the MN 101, the CN 121, the AR 105, the AR 109, the QNE 111, the QNE 113, the QNE 115, the QNE 117, the QNE 119, the QNE 123, and the QNE 125. The MN 101 connects to an AR and communicates with the CN 121 through wireless communication. The CN 121 becomes the communication partner of the MN 101. The AR 105 forms the subnet 103. The AR 109 forms the subnet 107. The QNE 111, the QNE 113, the QNE 115, the QNE 117, the QNE 119, the QNE 123, and the QNE 125 are provided on the path between the MN 101 and the CN 121 and have the QoS awareness function (QoS-aware). QoS-aware guarantees QoS regarding a packet transmitted between the MN 101 and the CN 121.

When the MN 101 is present in the subnet 103 (in other words, when the MN 101 is connected to the AR 105), the QNE 119, the QNE 117, the QNE 115, the QNE 113, the QNE 111, and the AR 105 are present on a downlink-direction path 137 from the CN 121 to the MN 101. When the MN 101 is present in the subnet 107 (in other words, when the MN 101 is connected to the AR 109), the QNE 119, the QNE 117, the QNE 115, the QNE 125, the QNE 123, and the AR 109 are present on a downlink-direction path 139 from the CN 121 to the MN 101. The path 137 and the path 139 partially overlap. A CRN between the path 137 and the path 139 is the QNE 115.

In Fig. 6, the data packet transmitted from the CN 121 to the MN 101 is transmitted via the path 137. At this time, all QNE 111, QNE 113, QNE 115, QNE 117, and QNE 119 on the path 137 have a QoS state related to the data packet to be transmitted from the CN 121 to the MN 101. In other words, each QNE 111, QNE 113, QNE 115, QNE 117, and QNE 119 holds a QoS state in which a filter D and a resource D are correlated. The filter D is the filter information of the path 137 (the filter information in which the IP address of the CN 121 is included as the destination address and the IP address [cCoA] assigned to the MN 101 by the subnet 103 is included as the destination address). The resource D is resource reservation information corresponding to the filter D. The QNE 111, the QNE 113, the QNE 115, the QNE 117, and the QNE 119 are configured to identify the filter information (filter D) with reference to the header (particularly the source address and the destination address) of the data packet transmitted from the CN 121 to the MN 101 and guarantee the QoS based on the corresponding resource reservation information (resource D).

The MN 101 may possibly move to the subnet 107. The MN 101 requests the proxy 123 to establish the predictive path (the path 139) or a portion of the predictive path. The proxy 123 establishes the predictive path or the portion of the predictive path before the MN 101 moves to the subnet 107. As a result, after the MN 101 actually moves to the subnet 107, the QoS path from the MN 101 to the CN 121 is established more quickly. The interrupt time of the QoS guarantee caused by the handover can be shortened.

When the QNE (proxy) 123 receives a trigger of some kind to establish the predictive path, the QoS path is established between the QNE (proxy) 123 and the CRN (here, the QNE 115). When the new path is established, the QNE (proxy) 123 and each intermediate QNE (such as QNE 125) between the QNE (proxy) 123 and the QNE 115 have a new QoS state. In other words, as shown in Fig. 7, in the QNE (proxy) 123 and the QNE 125, the resource D that is the same resource reservation information as that of the filter D is set for filter information (filter E) including the IP address of the CN as the source address and including the IP address of the QNE (proxy) 123 as the destination address.

At the same time, regarding QNE on the path between the QNE 115 and the CN 121, the new filter information (the above-described filter E) is added to the current filter information (filter D). As a result, as shown in Fig. 7, the QNE 115 and each intermediate QNE (such as the QNE 117 and the QNE 119) between the QNE 115 and the CN 121 have a QoS state in which the resource D is set for the filter D and the filter E. The resource D reserved for data traffic defined by the filter D can be used for data traffic defined by the filter E.

As described above, before the MN 101 moves to the subnet 107 (or unrelated to the movement of the MN 101 to the subnet 107), the QNE (proxy) 123 can make the resource reservation related to a portion of the path used after the MN 101 is connected to the subnet 107 (the path from the CN 121 to the QNE [proxy] 123) without the use of the NCoA (the new CoA assigned after the MN 101 has moved to the subnet 107) of the MN 101 (the state shown in Fig. 7).

Then, when the MN 101 acquires the NCoA (when the MN 101 actually moves to the subnet 107 and acquires the NCoA or when the MN 101 acquires the NCoA while being connected to the subnet 103), new filter information (filter F) is added to the filter D or the filter E in each intermediate QNE (the QNE 123, the QNE 125, the QNE 115, the QNE 117, and the QNE 119) on the path 139, as shown in Fig. 8. The filter F includes the NCoA of the MN 101 as the source address and the IP address of the CN 121 as the destination address. As a result, the QoS path is updated. When the MN 101 moves to the subnet 107, the filter D is preferably actively or passively deleted. When the filter information is present as information differing from the flow ID, the flow ID does not need to be dependent on the source address/destination address of the data packet.

For example, after the MN 101 moves to the subnet 107 and acquires the NCoA, an outer header including the filter E information (a header in which the source address is the IP address of the CN 121 and the destination address is the IP address of the QNE [proxy] 123) is added to the data packet transmitted from the CN 121 to the MN 101 and the data packet is encapsulated by the QNE (proxy) 123, until the update of the QoS path related to the NCoA is completed (the resource reservation related to the filter F is completed). The encapsulated data packet is identified by the filter E. The QoS of the data packet is guaranteed based on the resource A in each intermediate QNE, and the data packet is transmitted. The data packet is decapsulated by the QNE (proxy) 123. When the CN 121 is a QNE, the CN 121 preferably encapsulates the data packet transmitted from the CN 121 to the MN 101. However, another QNE (such as the QNE 119 closest to the CN 121 on the path) can also perform encapsulation.

Upon arrival of the packet having the header identified by the filter E, the QNE (proxy) 123 decapsulates the packet, extracts an inner packet, and transfers the inner packet to the MN 101. As a method for making the QOS reservation over the entire path, it is clear to a person skilled in the art that there are methods other than the above-described method of encapsulating the packet, such as minimal encapsulation within IPv4. An arbitrary packet encapsulation method can be applied to the invention. The invention favorably operates in other types of encapsulating and tunneling mechanisms.

In this way, the data packet is encapsulated until the resource reservation related to the filter F in which the NCoA of the MN 101 is set is completed. The QoS of the encapsulated data packet is guaranteed by the filter E in which the IP address of the QNE (proxy) 123 is set as the destination address. The interrupt time of the QoS guarantee until the resource reservation is made using the NCoA of the MN 101 can be shortened.

After the QoS is successfully updated with the filter F (in other words, after the filter F is added to all QNE on the route 139), the CN 121 completes the generation of the filter E data packet (encapsulation of the filter D data packet). Then, the filter D and the filter E are actively or passively deleted. Only QoS state related to the filter F ultimately remains. On the route 129 from the CN 121 to the MN 101, connected to the subnet 107, the QoS of the data packet from the CN 121 to the MN 101 is guaranteed.

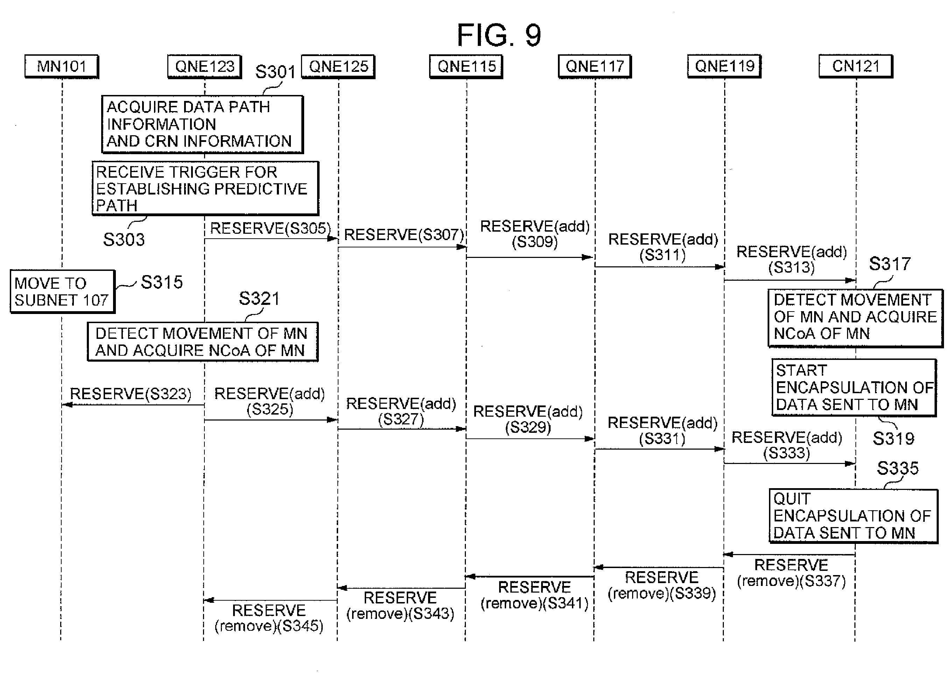

Next, an operation according to the second embodiment of the invention will be described. Fig. 9 is a sequence chart of an operation example according to the second embodiment of the invention. As according to the first embodiment of the invention described above, when information required for the operation of the invention is further added to the RESERVE message will be described. The RESERVE message is a message defined by the QoS NSLP of the NSIS. Furthermore, a configuration of the QNE according to the second embodiment of the invention is the same as the configuration of the QNE according to the first embodiment of the invention described above (see Fig. 4). Explanations thereof are omitted.

In Fig. 9, the QNE (proxy) 123 acquires data path information (such as resource capacity rate) of the MN 101 connected to the subnet 103 from the CN 121. The QNE (proxy) 123 also identifies the CRN in the downlink direction (QNE 115, herein) in advance (Step S301). For example, the QNE (proxy) 123 can acquire the information using a method such as those described in Non-patent Document 9 and Non-patent Document 10, above.

Then, as according to the first embodiment of the invention described above, the QNE (proxy) 123 receives a trigger of some kind to establish the predictive path (Step S303). As according to the first embodiment of the invention described above, the trigger includes information required to establish the predictive path, such as the session ID, the QSpec information, and the IP address of the CN 121 (or the QNR that is the last QNE on the route) used in the QoS path between the MN 101 and the CN 121.

The QNE (proxy) 123 that has received the trigger immediately transmits the receiver-initiated RESERVE message to which the "proxy flag" is added toward the CN 121, depending on the trigger (Step S305). The filter information of the reservation includes the IP address of the CN 121 as the source address and the IP address of the QNE (proxy) 123 as the destination address (filter E in Fig. 7). The QNE (proxy) 123 generates a filter/resource (filter E/resource D in Fig. 7) pair corresponding to the filter information and makes a new reservation. At Step S307, the QNE 125 that has received the RESERVE message from the QNE 123 similarly generates the filter/resource (filter E/resource D in Fig. 7) pair corresponding to the filter information and makes a new reservation.

At the same time, the RESERVE message (written as RESERVE(add) in Fig. 9) is transmitted at the QNE 117, the QNE 119, and the CN 121 (when the CN 121 is the QNE) (Step S309, Step S311, and Step S313). In addition, the filter information (the filter E in Fig. 7) included in the RESERVE message) is added to the current filter/resource (filter D/resource D in Fig. 6) pair currently being used for the data packet sent from the CN 121 to the MN 101. As a result of the above operation, the resource reservation information shown in Fig. 7 is set in each QNE.

The RESERVE message transmitted from the QNE (proxy) 123 includes information indicating that a process for adding the filter information, such as that described above, will be performed in the path following the CRN (QNE 115). The QNE 115 can reference the information and transmit the RESERVE message indicating the adding process to an upstream QNE (QNE 117). The QNE 115 can also know that the QNE 115 itself is the CRN as a result of a downstream QNE (QNE 125) that has received the RESERVE message being present in a direction differing from the path 137 belonging to the same session. In addition, when another path (other filter information) of the same session as the session to which the filter information of the received RESERVE message belongs is held in the resource reservation information, each QNE can add the filter information of the RESERVE message to the filter information that is originally being held.

Here, the MN 101 moves to the subnet 107 (Step S315). When the QNE [proxy] 123 detects the movement of the MN 101 and acquires the NCoA of the MN 101 (Step S321), the QNE [proxy] 123 transmits the sender-initiated RESERVE message to the MN 101 (Step S323). The filter information related to the RESERVE message includes the address of the CN 121 as the source address and the NCoA of the MN 101 as the destination address.

At the same time, the CN 121 also detects the movement of the MN 101, such as by a BU from the MN 101, and acquires the NCoA of the MN 101 (Step S317). The CN 121 starts the encapsulation of the data packet to the MN 101 (Step S319). In the encapsulation, a packet in which an outer header of which the destination address is set to the address of the QNE [proxy] 123 is added to a packet of which the NCoA of the MN 101 is the destination address is generated and transmitted. The destination address of the encapsulated data packet is the QNE [proxy] 123. The QoS treatment according to the filter information of the filter E is performed at each QNE on the path 129. As a result, the QoS is guaranteed.

After the RESERVE message is transmitted at Step S323, the QNE [proxy] 1.23 transmits the receiver-initiated RESERVE message (written as RESERVE(add) in Fig. 9) to the CN 121 (Step S325). The filter information of the reservation includes the IP address of the MN 101 as the destination address. The RESERVE message is transmitted via each QNE (the QNE 125, the QNE 115, the QNE 117, and the QNE 119) (Step S327, Step S329, Step S331, and Step S333). In addition, at each QNE, the filter information (the filter F in Fig. 8) included in the RESERVE message is added to the filter information (the filter E in Fig. 7) added or generated earlier. As a result of the above operation, the resource reservation information shown in Fig. 8 is set in each QNE. Then, when the CN 121 receives the RESERVE message, the CN 121 quits the encapsulation of the data packet (Step S335).

The CN 121 transmits the sender-initiated RESERVE message (written as RESERVE(remove) in Fig. 9) to the QNE [proxy] 123 to delete the filter information (filter E in Fig. 7) of which the destination address is the QNE [proxy] 123 employed at Step S305 to Step S313 (Step S337, Step S339, Step S341, Step S343, and Step S345). The deletion of the filter information by the RESERVE message is not necessarily required to be performed. The filter information can be deleted by the timer timing out.

As described above, according to the second embodiment, the QNE (proxy) 123 makes the resource reservation related to a portion (the path from the CN 121 to the QNE [proxy] 123) of the path (the path from the CN 121 to the MN 101) used after the MN 101 is connected to the subnet 107, without using the NCoA of the MN 101 assigned in the subnet 107. Until a complete path from the CN 121 to the MN 101 is established, transmission of the data packet is performed by the path established by the QNE (proxy) 123 and QoS state. As a result, when the MN 101 changes the connection from the subnet 103 to the subnet 107, the interrupt time of the QoS guarantee of the data packet transmitted from the CN 121 to the MN 101 can be shortened.

### <Third Embodiment>

Next, a third embodiment of the invention will be described. There is no clear difference between the filter information (the filter) and the flow ID in the above descriptions. However, functions of each QNE, signal message processing, and the like when the filter information and the flow ID are clearly defined will be described hereafter.

First, the filter information according to the third embodiment of the invention will be described. According to the third embodiment of the invention, the filter information is defined as information used by each QNE as a packet classifier. Similar to filter spec in the RSVP, the filter information is carried to each QNE as a parameter of the signaling message for making the QoS reservation. In other words, in the NSIS, the filter information is information mainly generated and managed in the NSLP. Each QNE stores the filter information with the information on the requested QoS resource information, thereby distinguishing to which data packet the reserved QoS resource is provided. Therefore, the filter information includes the header information of the data packet receiving the reserved QoS guarantee. In other words, similar to the filter spec in the RSVP, examples of the information included in the filter information are the source and destination IP addresses, a protocol identifier, a port number, a flow label (for IPv6), a security parameters index (SPI) (when encapsulated by IPSec), a differentiated services code point/type of service (DSCP/TOS) field, and the like.

The filter information can also take on a form of a filter list for a single QoS reservation. In this case, even when the QNE receives a data packet having a header with the same content as any filter information within the filter list for a single QoS reservation, the QNE can provide the reserved resource.

The filter list can be managed along which an identifier indicating to which flow or session the list belongs (such as a flow ID or a session ID). When data packets belonging to the same session are transmitted and received using a plurality of paths having differing characteristics (for example, triangle routes and optimal routes of the mobile IP and a plurality of paths used in communication using a multihomed terminal), in addition to the flow ID and the session ID, the file list can be managed along with an identifier identifying the type of the plurality of paths (for example, a path type IN [refer to Non-patent Document 12]).

Hereafter, an example of a method for managing the filter list will be explained. A following and the like can be considered as an example of a way of providing the filter list carried by the signaling message for making the QoS reservation (such as the RESERVE message of the NSIS):
Filter-List::=<List Length> <Action> <Filter> <Filter>...
   Here, the filter list has the <List Length>, <Action>, and a plurality of filter information <Filter>. The <List Length> indicates a number of pieces of filter information included in the filter list (in other words, the number of <Filter>). The <Action> indicates the information specifying how each QNE handles the filter list. For example, information included in the <Action> can be "Add", "Sub", "Replace", and the like. For example, when the <Action> is "Add" and an existing filter list corresponding to the same session ID and path type ID (when the path type ID is provided) is present in the QNE, the subsequent filter information <Filter> is added to the list. When the filter list is not present, a new filter list is created and the resource corresponding to the created filter list is reserved. For example, when the <Action> is "Sub", only the subsequent filter information <Filter> is deleted from the existing filter list corresponding to the same session ID and path type ID (when the path type ID is provided). For example, when the <Action> is "Replace", the existing filter list itself corresponding to the same session ID and path type ID (when the path type ID is provided) in the QNE is replaced.

For example, by taking on a following format,
Filter-List::=<List Length> <Action> <Filter> <Filter>... <List Length> <Action> <Filter> <Filter>..., a plurality of modification operations related to the filter information can be performed at once by one filter list. For example, when a certain QNE stores a filter list,
Filter-list:=<filter 1> <filter 2> <filter 3>, including three pieces of filter information (<filter 1>, <filter 2>, and <filter 3>) corresponding to a session ID "300" and a path type ID "0x00", the QNE receives a RESERVE message having the same session ID and path type ID. When the filter information included in the RESERVE message is
Filter-List: :=<2> <add> <filter 4> <filter 5> <1> <sub> <filter 1>,
the filter list stored in the QNE is updated to
Filter-list:= <filter 2> <filter 3> <filter 4> <filter 5>.
The format of the filter list, described above, is an example. If the filter information and the information on an action performed on the filter information can be clarified in the signaling message for making the QoS reservation, the filter list can be in another format or hold other information.

Next, the flow ID according to the third embodiment of the invention will be described. According to the third embodiment of the invention, the flow ID is mainly managed by the NTLP that is the lower layer of the NSIS. The flow ID is used by the NTLP to identify to which flow a signaling message belongs. The difference between the flow ID and the session ID is that the session ID does not change from the start to the end of a session, whereas the flow ID can change as a result of a path change caused by the movement of the terminal, for example. Furthermore, a plurality of flow ID can be present for a single session. Although in Non-patent Document 11A, the information included in the flow ID is positioned as message routing information (MRI), the information included in the flow ID according to the third embodiment of the invention is not the same. An example of the flow ID according to the third embodiment of the invention can be information including the IP addresses of the source and the destination of the signaling message. In this case, the flow ID according to the third embodiment of the invention is not necessarily required to include the information held by the filter information, such as the protocol identifier and the port number, unlike the flow ID described in Non-patent Document 11A. Furthermore, when the source and the destination of the data and the source and the destination of the signaling message differ, or when other filter information such as the port number differs even when the source and the destination are the same, and the signaling message requires the QOS guarantee as does the data packet, the filter information of the signaling message should be added to the filter list.

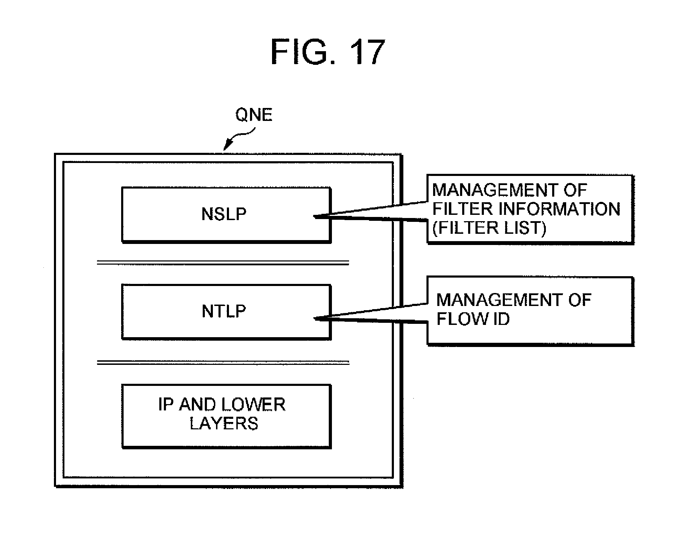

Fig. 17 is a diagram schematically showing a main body managing filter information and flow ID within the QNE according to the third embodiment of the invention. As described above, two pieces of information, the filter information and the flow ID, are managed in the NSIS protocol layer. However, the filter information (the filter list) is mainly managed in the NSLP layer that is an upper layer of the NSIS. The flow ID is mainly managed in the NTLP layer that is the lower layer of the NSIS. The NSLP layer and the NTLP layer are not necessarily required to individually manage and generate the filter information and the flow ID as shown in Fig. 17. Management and generation can be performed by information being exchanged between the NSLP layer and the NTLP layer and information being exchanged with other layers.

In this way, by the information managed in the NSIS protocol layer being clearly divided into the filter information and the flow ID and defined, each QNE can transmit the signaling message without requiring information (such as the IP addresses set as the source and the destination of the data) on the terminals performing the transmission and the reception of the data packet. An early establishment method of the QoS path using this characteristic will be described below.

Here, an example in which the direction in which the data packet is transmitted is the uplink direction will be explained. However, the same procedures can be used when the direction in which the data packet is transmitted is the downlink direction.

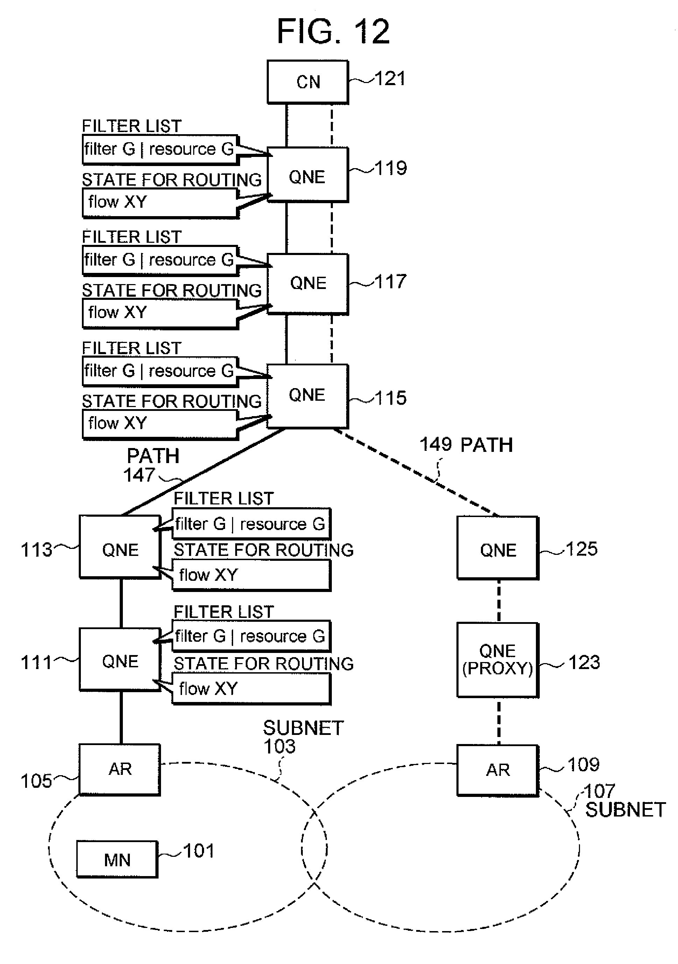

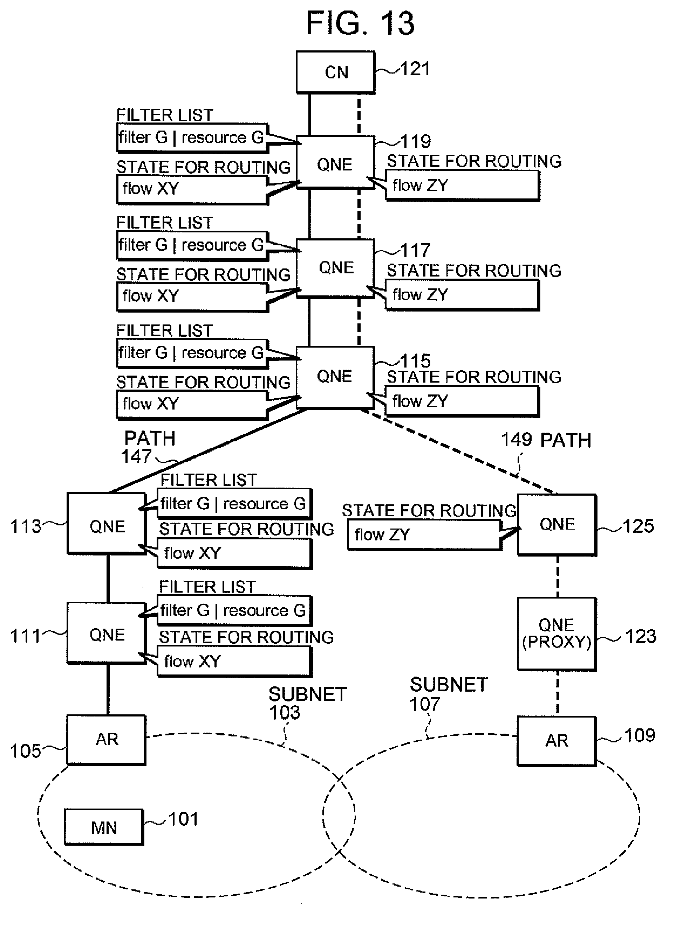

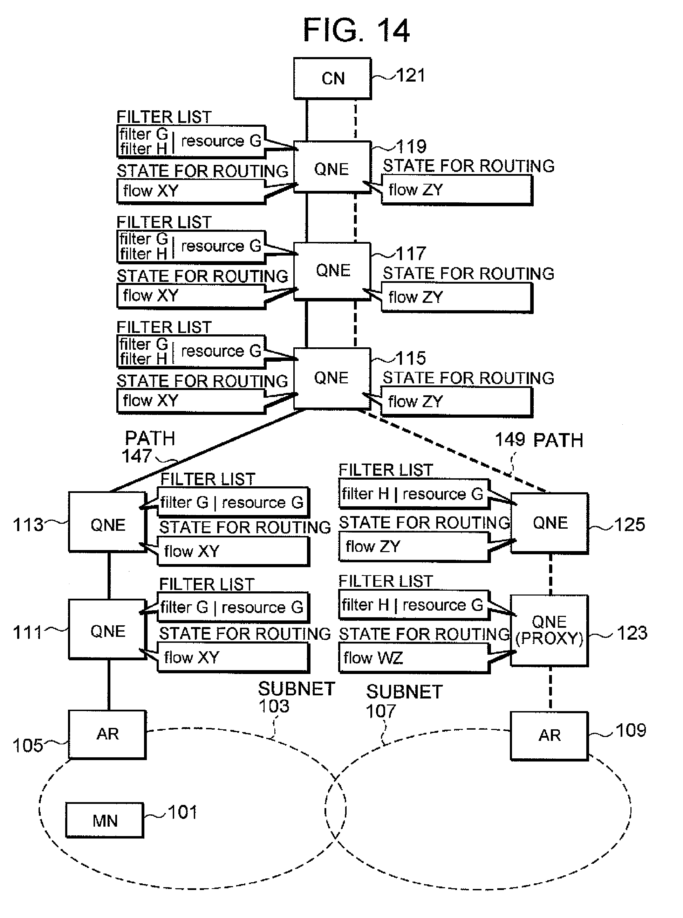

First, an overview according to the third embodiment of the invention will be described with reference to Fig. 12 to Fig. 14. Fig. 12 is a diagram schematically showing a state of a QoS reservation before the subset to which the MN is connected is changed and a state of a flow ID included within a state for routing in a communication system according to the third embodiment of the invention. Fig. 13 is a diagram schematically showing a state in which the QNE that is a proxy of the MN establishes the state for routing on a predictive path for the MN by indicating the flow ID included therein in the communication system according to the third embodiment of the invention. Fig. 14 is a diagram schematically showing a state in which the MN moves to a new subset and a new QoS path is established between the MN and a CN in the communication system according to the third embodiment of the invention.

As does Fig. 1 to Fig. 3, Fig. 12 to Fig. 14 shows the MN 101, the CN 121, the AR 105, the AR 109, the QNE 111, the QNE 113, the QNE 115, the QNE 117, the QNE 119, the QNE 123, and the QNE 125. The MN 101 connects to an AR and communicates with the CN 121 through wireless communication. The CN 121 becomes the communication partner of the MN 101. The AR 105 forms the subnet 103. The AR 109 forms the subnet 107. The QNE 111, the QNE 113, the QNE 115, the QNE 117, the QNE 119, the QNE 123, and the QNE 125 are provided on the path between the MN 101 and the CN 121 and have the QoS awareness function (QoS-aware). QoS-aware guarantees QoS regarding a packet transmitted between the MN 101 and the CN 121.

When the MN 101 is present in the subnet 103 (in other words, when the MN 101 is connected to the AR 105), the AR 105, the QNE 111, the QNE 113, the QNE 115, the QNE 117, and the QNE 119 are present on an uplink-direction path 147 from the MN 101 to the CN 121. When the MN 101 is present in the subnet 107 (in other words, when the MN 101 is connected to the AR 109), the AR 109, the QNE 123, the QNE 125, the QNE 115, the QNE 117, and the QNE 119 are present on an uplink-direction path 149 from the MN 101 to the CN 121. The path 147 and the path 149 partially overlap. A CRN between the path 147 and the path 149 is the QNE 115.

In Fig. 12, the data packet transmitted from the MN 101 to the CN 121 is transmitted via the path 147. At this time, all QNE 111, QNE 113, QNE 115, QNE 117, and QNE 119 on the path 147 have a QoS state related to the data packet to be transmitted from the MN 101 to the CN 121. In other words, each QNE 111, QNE 113, QNE 115, QNE 117, and QNE 119 holds a state related to a QoS reservation in which a filter list including a filter G and a resource G are correlated.
The filter G is the filter information related to the data packet sent through the path 147 (the filter information in which the IP address of the CN 121 is included as the destination address and the IP address [cCoA] assigned to the MN 101 by the subnet 103 is included as the source address) . The resource G is resource reservation information corresponding to the filter list. The QNE 111, the QNE 113, the QNE 115, the QNE 117, and the QNE 119 are configured to identify the filter information (the filter G) with reference to the header of the data packet transmitted from the CN 121 to the MN 101 and guarantee the QoS based on the corresponding resource reservation information (the resource G).

At the same time, the NTLP layer of each QNE 111, QNE 113, QNE 115, QNE 117, and QNE 119 holds an identification of the signaling message and a state for routing (a routing state and message association [refer to Non-patent Document 11A]). The state for routing includes the flow ID created from information including the source and the destination of the signaling message in the path 147. Here, it is supposed that the source of the signaling message is the MN 101 (cCoA is X) and the destination of the signaling message is the CN 121 (the IP address is Y). The flow ID held by the NTLP layer of each QNE 111, QNE 113, QNE 115, QNE 117, and QNE 119 within the state for routing is flow XY.

The MN 101 may possibly move to the subnet 107. The MN 101 requests the proxy 123 to prepare for an establishment of a portion of the predictive path (the path 149) (in other words, prepare for establishment from the QNE [proxy] 123 to the CN 121) . In other words, the MN 101 requests that each QNE on the path holds state for routing after the movement to the subnet 107, in advance. The QNE (proxy) 123 prepares a portion of the predictive path before the MN 101 moves to the subnet 107. As a result, after the MN 101 actually moves to the subnet 107, the QoS path from the CN 121 to the MN 101 is more quickly established. The interrupt time of the QoS guarantee caused by the handover can be shortened. This is because, though a complicated process is required for a new establishment of the state for routing, once this state for routing has been established, the signaling message can be routed using the state.

When the QNE (proxy) 123 receives a trigger of some kind to prepare for the establishment of the predictive path, the QNE (proxy) 123 starts a process for newly establishing the state for routing in the QNE between the QNE (proxy) 123 and the CN 121. As a result, the QNE between the QNE (proxy) 123 and the CN 121 holds the state for routing. In other words, as shown in Fig. 13, the state for routing including the flow ID (the flow XY) in which the IP address (Z) of the QNE (proxy) 123 is included as the source address and the IP address (namely Y) of the CN 121 is included as the destination address is set in the NTLP layer of the QNE (proxy) 123, the QNE 125, the QNE 115, the QNE 117, and the QNE 119. The state for routing related to the path 147 remains as is.

As described above, before the MN 101 moves to the subnet 107 (or unrelated to the movement of the MN 101 to the subnet 107), the QNE (proxy) 123 can establish the state for routing related to a portion of the path used after the MN 101 is connected to the subnet 107 (the path from the QNE [proxy]123 to the CN 121) without the use of a NCoA (a new CoA assigned after the MN 101 has moved to the subnet 107) of the MN 101 (the state shown in Fig. 13).

Then, when the MN 101 acquires the NCoA (when the MN 101 actually moves to the subnet 107 and acquires the NCoA or when the MN 101 acquires the NCoA while being connected to the subnet 103), new filter information (a filter H) in which the NCoA of the MN 101 is the source of the data packet and the IP address of the CN 121 is the destination of the data packet is created. Then, as shown in Fig. 14, a filter list including the filter H is newly stored in the QNE (proxy) 123 and the QNE 125 on the path 149. The filter H is added to the existing filter list (for the same session) in the QNE 115, the QNE 117, and the QNE 119.

When the MN 101 has moved to the subnet 107, as a result of the state for routing between the MN 101 and the QNE (proxy) 123 being established, a state for end-to-end routing from the MN 101 to the CN 121 is established. The flow ID used in the state for routing between the MN 101 and the CN 121 differs from that (a flow ZY) used from the QNE (proxy) 123 to the CN 123. The flow ID can be a flow ID in which the NCoA (W) acquired by the MN 101 in the subnet 107 is the source of the signaling message and the IP address of the QNE (proxy) 123 is the destination of the signaling message (namely Z). To unify the end-to-end flow ID, the flow ID used in the state for routing between the MN 101 and the QNE (proxy) 123 can be that (the flow ZY) used from the QNE (proxy) 123 to the CN 121.

When the flow ID between the MN 101 and the QNE (proxy) 123 differs from that used from the QNE (proxy) 123 to the CN 121, the QNE (proxy) 123 is required to perform operations, such as replacing the flow ID (the flow WZ) added to the signaling message transmitted from the MN 101 in the subnet 107 with the flow ZY and transmitting the replaced flow ID. As described above, because the state for routing the signaling message is already present on the path 149, the operation for QoS resource reservation is performed more quickly compared to when a new signaling message for the QoS reservation is sent over the path 149, after the QNE (proxy) 123. As a result, the interrupt time of the QoS guarantee until the resource reservation is made using the NCoA of the MN 101 can be shortened. After the MN 101 has moved to the subnet 107, the filter information (the filter G) used before the movement and the state for routing on the path 149 are preferably actively or passively deleted.

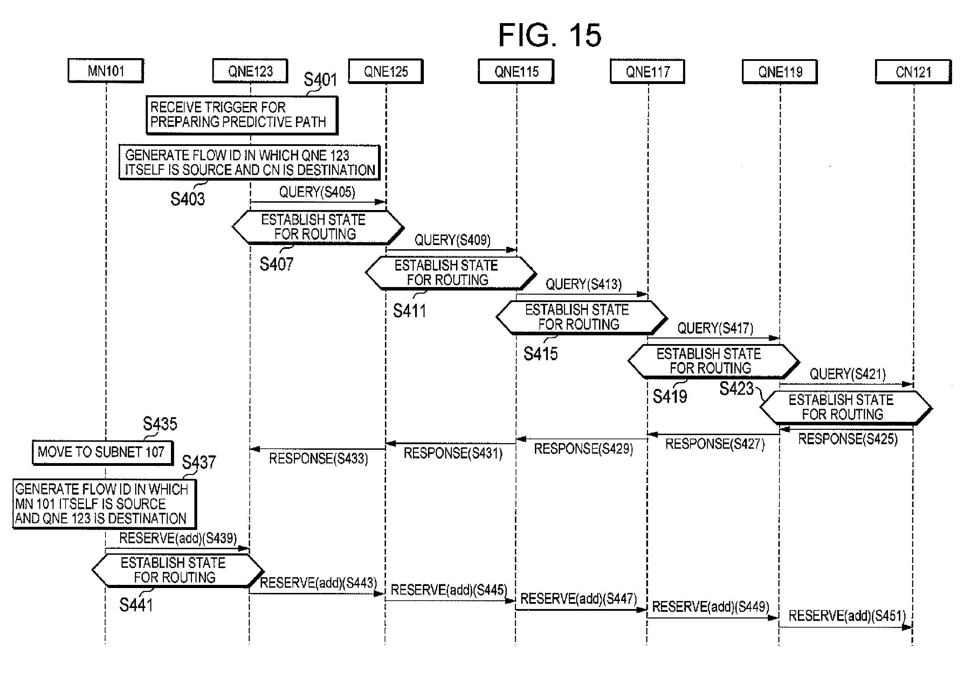

Next, a first operation example according to the third embodiment of the invention will be described. Fig. 15 is a sequence chart of an operation example when the transmission direction of the data packet is the uplink direction according to the third embodiment of the invention.
Here, as a specific example, when the information required for the operation of the invention is further added to the QUERY message will be described. The QUERY message is defined by the QoS NSLP of the NSIS as a message that is transmitted to create the state for routing in each QNE and does not require the filter information. Also, when the information required for the operation of the invention is further added to the RESERVE message will be described. The RESERVE message is defined by the QoS NSLP of the NSIS as a message for reserving the QoS resource. Terms used according to the third embodiment of the invention, "RESERVE message", "QUERY message", and "RESPONSE message" include information generated in the NSLP layer (referred to as a payload section of the message), information generated in the NTLP layer (referred to as a header section), and an IP header (including an option section).

In Fig. 15, first, the QNE (proxy) 123 receives the trigger to prepare the predictive path (Step S401). The trigger includes information required to establish the predictive path, such as the session ID used on the QoS path between the MN 101 and the CN 121 and the IP address of the CN 121 (or the QNR that is the last QNE on the path).

The QNE (proxy) 123 that has received the trigger immediately generates the payload section of the QUERY message in the NSLP layer, depending on the trigger, and passes the payload section to the NTLP layer. At the NTLP layer, the QNE (proxy) 123 receives the payload section and generates a flow ID of which the QNE (proxy) 123 itself is the source of the signaling message and the CN 121 is the destination (Step S403). The QNE (proxy) 123 transmits the QUERY message of which the head section includes the flow ID toward the CN 121, via the lower layers (Step S405). The QUERY message is a message sent in a new downstream direction (the same direction as the data transmission direction) on the path 149. Therefore, the RAO for the QNE is attached to the IP header of the QUERY message.

When the QUERY message is received and the RAO is found in the IP header, all of the QNE (the QNE 125, the QNE 115, the QNE 117, and the QNE 119) on the path from the QNE (proxy) 123 to the CN 121 confirm the content of the QUERY message in the NSIS layer (the NSLP layer and the NTLP layer) and perform necessary processing. In other words, the QNE 125, the QNE 115, the QNE 117, and the QNE 119 that have received the QUERY message performs a process for establishing the state for routing (a process for establishing the routing state and message association [when requested]) in the NTLP layer, in addition to the QUERY process in the QoS NSLP layer (Step S407, Step S411, Step S415, Step S419, and Step S423) . Then, each QNE transmits the QUERY message towards the CN 121 (Step S409, Step S413, Step S417, and Step S421). When the QUERY message reaches the CN 121, the CN 121 returns a RESPONSE message for the QUERY message to the QNE 123 (Step S425, Step S427, Step S429, Step S431, and Step S433).

Here, the MN 101 moves to the subnet 107 (Step S435). When the NCoA is acquired from the subnet 107, the MN 101 generates the flow ID of which the NCoA is the source of the signaling message and the QNE (proxy) 123 is the destination of the signaling message in the NTLP layer (Step S437). In the NSLP layer of the MN 101, filter information including information in which the NCoA of the MN 101 itself is the source of the data packet and the IP address of the CN 121 is the destination of the data packet is generated. The sender-initiated RESERVE message (written as RESERVE(add) in Fig. 15) that adds the filter information and reserves the QoS resource is transmitted towards the QNE (proxy) 123 (Step S439). The RESERVE message is a message sent from the MN 101 in a new downstream direction (the same direction of the data transmission direction) to the QNE (proxy) 123 on the path 149. Therefore, the RAO for QNE is attached to the IP header of the RESERVE message.

The QNE (proxy) 123 that has received the RESERVE message performs the process of establishing the state for routing in the NTLP (Step S441) and performs the process of resource reservation in the NSLP. In the NTLP layer, the QNE (proxy) 123 confirms that the RESERVE message is required to be transmitted to the CN 121, from information such as the session ID. The QNE (proxy) 123 changes the information of the flow ID included in the RESERVE message to the flow ID generated at Step S403 and transmits the RESERVE message to the CN 121 (Step S443). At this time, the NTLP can notify the NSLP that the message is required to be transmitted towards the CN 121. In this case, the state for routing is already established in the QNE 123, QNE 125, the QNE 115, the QNE 117, and the QNE 119. Therefore, the RAO is not required to be added to the RESERVE message. The QNE 123, the QNE 125, the QNE 115, the QNE 117, and the QNE 119 can perform the process for resource reservation, with reference to the received RESERVE message, and quickly transmit the RESERVE message (Step S445, Step S447, Step S449, and Step S451) . The flow ID used between the MN 101 and the QNE (proxy) 123 is the same as the flow ID used between the QNE (proxy) 123 and the CN 121.

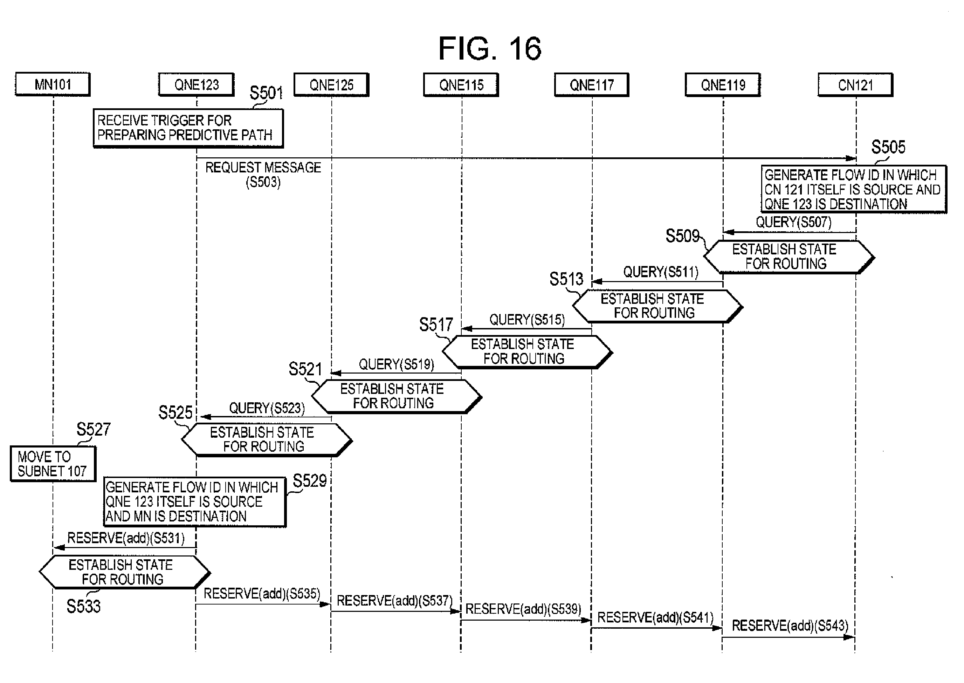

A second operation example according to the third embodiment will be described. In the first operation example according to the third embodiment, described above, when the data packet transmission direction is the uplink direction is explained. However, the same procedures can also be applied to when the data packet transmission direction is the downlink direction. This is described with reference to Fig. 16. Fig. 16 is a sequence chart of an operation example when the transmission direction of the data packet is the downlink direction according to the third embodiment of the invention.

When the QNE (proxy) 123 receives the trigger to prepare the predictive path (Step S501), the QNE (proxy) 123 transmits a request message requesting a predictive path preparation to the CN 121 (Step S503). The trigger for the preparation of the predictive path can be sent directly to the CN 121, rather than to the QNE (proxy) 123. In this case, the trigger is required to include information such as the IP address of the QNE (proxy) 123.

The CN 121 that has received the request message or the trigger immediately generates the payload section of the QUERY message in the NSLP layer, depending on the request message or the trigger, and passes the generated payload section to the NTLP layer. At the NTLP layer, the CN 121 receives the payload section and generates a flow ID of which the CN 121 itself is the source of the signaling message and the QNE (proxy) 123 is the destination (Step S505). The CN 121 transmits the QUERY message of which the header section includes the flow ID towards the QNE (proxy) 123, via the lower layers (StepS507). The QUERY message is a message sent in a new downstream direction (the same direction as the data transmission direction) on the path 149. Therefore, the RAO for the QNE is attached to the IP header of the QUERY message.

When the QUERY message is received and the RAO is found in the IP header, all of the QNE (the QNE 119, the QNE 117, the QNE 115, and the QNE 125) on the path from the CN 121 to the QNE (proxy) 123 confirm the content of the QUERY message in the NSIS layer (the NSLP layer and the NTLP layer) and perform necessary processing. In other words, the QNE 119, the QNE 117, the QNE 115, and the QNE 125 that have received the QUERY message performs the process for establishing the routing state in the NTLP layer, in addition to the QUERY process in the QoS NSLP layer (Step S509, Step S513, Step S517, Step S521, and Step S525). Then, each QNE transmits the QUERY message towards the QNE (proxy) 123 (Step S511, Step S515, Step S519, and Step S523).

Here, the MN 101 moves to the subnet 107 (Step S527). The QNE (proxy) 123 detects the movement of the MN 101. When the MN 101 acquires the NCoA from the subnet 107, the QNE (proxy) 123 generates the flow ID of which the IP address of the QNE (proxy) 123 itself is the source of the signaling message and the NCoA of the MN 101 is the destination of the signaling message in the NTLP layer (Step S529) . In the NSLP layer of the QNE (proxy) 123, filter information including information in which the IP address of the CN 121 is the source of the data packet and the NCoA of the MN 101 is the destination of the data packet is generated. The sender-initiated RESERVE message (written as RESERVE(add) in Fig. 16) that adds the filter information and reserves the QoS resource is transmitted towards the MN 101 (Step S531). The QNE (proxy) 123 also performs the process for establishing the state for routing for the data packet to be transferred to the MN 101 in the NTLP layer (Step S533).

The QNE (proxy) 123 transmits the receiver-initiated RESERVE message (written as RESERVE (add) in Fig. 16) towards the CN 121 (Step S535) . The RESERVE message transmitted to the MN 101 is a message sent from the QNE (proxy) 123 in a new downstream direction (the same direction as the data transmission direction) to the MN 101 on the path 149. Therefore, the RAO for the QNE is attached to the RESERVE message. However, regarding the RESERVE message transmitted to the CN 121, the state for routing is already established in the QNE 123, the QNE 125, the QNE 115, the QNE 117, and the QNE 119. Therefore, the RAO is not required to be added to the RESERVE message. The QNE 125, the QNE 115, the QNE 117, and the QNE 119, can perform the process for resource reservation, with reference to the received RESERVE message, and quickly transmit the RESERVE message (Step S537, Step S539, Step S541, and Step S543, and Step S545) . The flow ID used between the QNE (proxy) 123 and the MN 101 is the same as the flow ID used between the QNE (proxy) 123 and the CN 121.

As described above, in the first operation example and the second operation example according to the third embodiment of the invention, the QNE (proxy) 123 performs the preparation (particularly the process of establishing the state for routing) for the QoS reservation related to a portion (such as the route between the QNE [proxy] 123 and the CN 121) of the path (the path from the MN 101 to the CN 121) used after the MN 101 is connected to the subnet 107, without using the NCoA of the MN 101 assigned in the subnet 107. As a result, when the MN 101 changes the connection from the subnet 103 to the subnet 107, the interrupt time of the QoS guarantee of the data packet transmitted from the CN 121 to the MN 101 can be shortened.

As described above, as a result of the flow ID and the filter list being defined, the QoS route can be easily managed, not limited to the case that MN performs handover.

For example, when the MN communicates with the CN using a plurality of IP address for a single session (when the MN is in a multihomed-state), and when every IP address belongs to the same subnet is considered. In this case, regardless of which IP address is set in the data packet, the data packet only passes through one path. Therefore, the NTLP layer in each QNE should employ one of the plurality of IP addresses held by the MN as the destination (or source) of the flow ID. The filter list to be used as the packet classifier corresponds to a plurality of pieces of filter information, as described above. Therefore, the filter list can easily hold all of the plurality of IP addresses held by the MN.

Furthermore, in data download using a file transfer protocol (FTP) and the like, a client may simultaneously use a plurality of ports to increase the download speed. In this case as well, one of the plurality of port numbers should be employed as the flow ID, similar to when the MN holds the plurality of IP addresses as described above. When the flow ID is completely formed from only the IP address information, the port number is not required to be managed in the NTLP. The filter list used as the packet classifier corresponds to the plurality of pieces of filter information. Therefore, the plurality of port numbers can be easily held, as when the MN holds the plurality of IP addresses as described above.

Furthermore, when the session for voice over IP (VoIP) is held using H.323, the port number being used changes during an intermediate process. However, even in this case, as a result of the flow ID and the filter list being defined as described above, the flow ID information is not required to be modified based on the change to the port number on the NTLP side. At the same time, because the filter information can be easily added to and deleted from the filter list used as the packet classifier, the changes to the port number can be flexibly handled.

Next, a third operation example according to the third embodiment of the invention will be described. Even when the NATFW is present on the data path (the path connecting the MN 101 and the CN 121), a seamless QoS guarantee that reduces the interrupt time of the QoS guarantee during the handover of the MN 101 is preferably provided. At this time, to provide a seamless QoS guarantee, as in the first operation example (refer to Fig. 15) and the second operation example (refer to Fig. 16) according to the third embodiment of the invention, the process for establishing the state for routing is performed first in the NTLP layer. After the handover of the terminal, the QoS resource reservation is preferably made, and the NATFW policy rules are preferably added and rewritten.

Hereafter, under the assumption that the QNE 117 on the data path is the NATFW, as in the first operation example according to the third embodiment of the invention, an operation is explained in which, when the MN 101 performs the handover from the subnet 103 to the subnet 107, the QNE (proxy) 123 performs the preparation for the QOS reservation (particularly the process of establishing the state for routing) related to a portion of the path used after the MN 101 handover, without using the NCoA of the MN 101 assigned by the subnet 107.

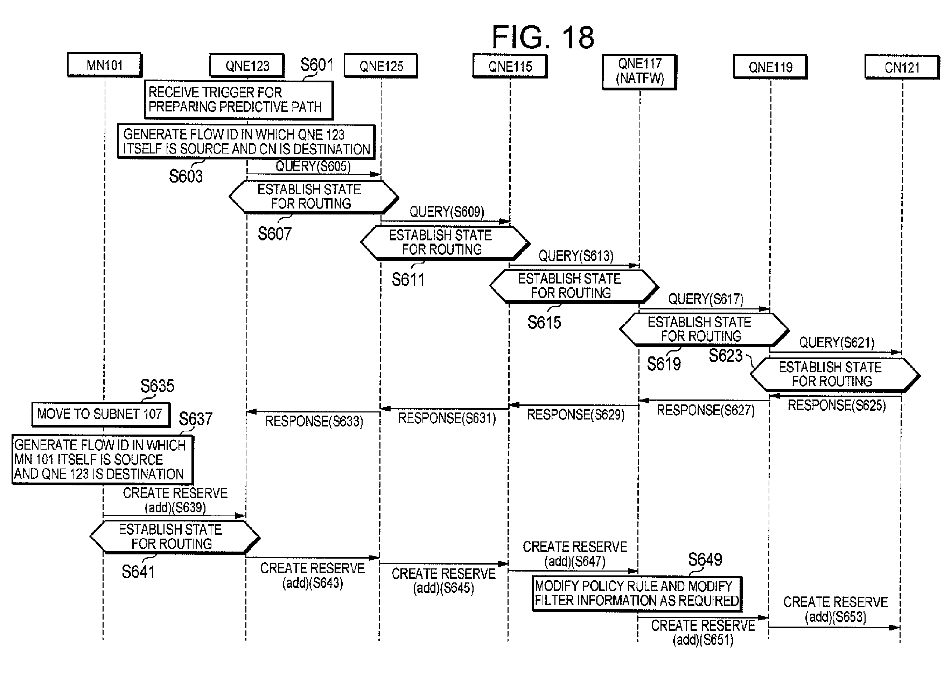

Fig. 18 is a sequence chart of an operation example when the NATFW is present on the data path and the transmission direction of the data packet is the uplink direction according to the third embodiment of the invention. Here, it is supposed that the QNE 117 has NATFW functions and the QNE 119 and the CN 121 are present within a LAN using a private address. The NATFW NSLP is implemented in the MN 101, the QNE 117, and the CN 121. Furthermore, a policy rule allowing the NSIS signaling message to pass through the NATFW is set in the NATFW (QNE 117) in advance. As in the first operation example shown in Fig. 15, an example is described in the sequence shown in Fig. 18 in which the QUERY message defined in the QoS NSLP of the NSIS is used as an example of a message transmitted to create the state for routing in each QNE.

In Fig. 18, first, the QNE (proxy) 123 receives the trigger to prepare the predictive path (Step S601). The trigger includes information required to establish the predictive path, such as the session ID used in the QoS path between the MN 101 and the CN 121 and the IP address of the CN 121 (or the QNR that is the last QNE on the path).

The QNE (proxy) 123 that has received the trigger immediately generates the payload section of the QUERY message in the NSLP layer, depending on the trigger, and passes the payload section to the NTLP layer. At the NTLP layer, the QNE (proxy) 123 receives the payload section and generates a flow ID of which the QNE (proxy) 123 itself is the source of the signaling message and the CN 121 is the destination (Step S603). The QNE (proxy) 123 transmits the QUERY message of which the head section includes the flow ID toward the CN 121, via the lower layers (Step S605) . The QUERY message is a message sent in a new downstream direction (the same direction as the data transmission direction) on the path 149. Therefore, the RAO for the QNE is attached to the IP header of the QUERY message.

When the QUERY message is received and the RAO is found in the IP header, all of the QNE (the QNE 125, the QNE 115, the QNE 117, and the QNE 119) on the path from the QNE (proxy) 123 to the CN 121 confirm the content of the QUERY message in the NSIS layer (the NSLP layer and the NTLP layer) and perform necessary processing. In other words, the QNE 125, the QNE 115, the QNE 117, and the QNE 119 that have received the QUERY message performs a process for establishing the state for routing (the process for establishing the routing state and message association [when requested]) in the NTLP layer, in addition to the QUERY process in the QoS NSLP layer (Step S607, Step S611, Step S615, Step S619, and Step S623) . Then, each QNE transmits the QUERY message towards the CN 121 (Step S609, Step S613, Step S4617, and Step S621). When the QUERY message reaches the CN 121, the CN 121 returns the RESPONSE message for the QUERY message to the QNE 123 (Step S625, Step S627, Step S629, Step S631, and Step S633).

Here, the MN 101 moves to the subnet 107 (Step S635) . When the NCoA is acquired from the subnet 107, the MN 101 generates the flow ID of which the NCoA is the source of the signaling message and the QNE (proxy) 123 is the destination of the signaling message in the NTLP layer (Step S637). In the NSLP layer of the MN 101, filter information including information in which the NCoA of the MN 101 itself is the source of the data packet and the IP address of the CN 121 is the destination of the data packet is generated. In the NATFW NSLP layer, a CREATE message (written as CREATE in Fig. 18) is generated. The CREATE message has parameters allowing a policy rule to be created in the NATFW (QNE 117) . The policy rule allows the data packet holding the filter information to pass through the NATFW. In the QoS NSLP layer, the sender-initiated RESERVE message (written as RESERVE(add) in Fig. 18) that adds the filter information and reserves the QoS resource is created. The MN 101 collects the above-described CREATE message and the RESERVE message into one message (CREATE and RESERVE message) and transmits the message towards the QNE (proxy) 123 (Step S639). The above CREATE and RESERVE message is a message sent from the MN 101 in a new downstream direction (the same direction of the data transmission direction) to the QNE (proxy) 123 on the path 149. Therefore, the RAO for the QNE is attached to the IP header of the CREATE and RESERVE message.

The QNE (proxy) 123 that has received the CREATE and RESERVE message performs the process for establishing the state for routing in the NTLP (Step S641) and performs the process for resource reservation in the NSLP. In the NTLP layer, the QNE (proxy) 123 confirms that the CREATE and RESERVE message is required to be transmitted to the CN 121, from information such as the session ID. The QNE (proxy) 123 changes the information of the flow ID included in the CREATE and RESERVE message to the flow ID generated at Step S603 and transmits the CREATE and RESERVE message to the CN 121 (Step S643). At this time, the NTLP can notify the NSLP that the message is required to be transmitted towards the CN 121. In this case, the state for routing is already established in the QNE 123, QNE 125, the QNE 115, the QNE 117, and the QNE 119. Therefore, the RAO is not required to be added to the CREATE and RESERVE message. The QNE 123, the QNE 125, the QNE 115, the QNE 117, and the QNE 119 can perform the process for resource reservation, with reference to the RESERVE portion of the received CREATE and RESERVE message, and quickly transmit the CREATE and RESERVE message (Step S645, Step S647, Step S651, and Step S653) . In the NATFW (QNE 117), the policy rule is modified with reference to the CREATE portion of the CREATE and RESERVE message (Step S649). At this time, if the policy rule includes an address translation of the data packet, the content of the relevant filter information included in the filter list is changed to correspond to the private address. Alternatively, the filter information for the private address is added to the list. As a result, in the RESERVE process performed between the QNE 117 and the QNE 119 or between the QNE 119 and the CN 121, the QoS resource is reserved for the private address. The flow ID used between the MN 101 and the QNE (proxy) 123 can be the same as the flow ID used between the QNE (proxy) 123 and the CN 121. If information on the private address is known in advance on the signaling message transmitting side, the address information can be present within the filter list in advance. In this case, the NATFW (QNE 117) is not required to change the content of the filter list at Step S649.

Here, an example in which the CREATE and RESERVE are simultaneously transmitted using the state for routing for the QOS signaling has been given However, in this case, the specifications of the NSIS is required to be modified to support the simultaneous transmission (as a single packet) of a plurality of NSLP messages. The RESERVE message and the CREATE message can be separately transmitted. However, in this case, the CREATE message is required to be transmitted before the RESERVE message (because rewriting of the filter information within the RESERVE message may be required at Step S649). The state for routing for the NATFW signaling is preferably established in advance using the QNE (proxy) 123, as is for the QoS.

Here, when the data packet transmission direction is the uplink direction is explained. However, the same procedures can be applied when the data packet transmission direction is the downlink direction, as well, by the CREATE message being transmitted simultaneously with the RESERVE message in the second operation example shown in Fig. 16.

In the third operation example according to the third embodiment of the invention, above, when the NATFW (QNE 117) has both NSLP, the QoS NSLP and the NATFW NSLP, is explained. In this case, the filter list can be present in a shared section of the NSLP and each NSLP can reference the filter list. Filter information combinations used by each NSLP may differ. In this case, information (such as a raised flag) indicating which NSLP uses the filter information can be provided to each piece of filter information within the filter list.

The filter list can be divided by NSLP. In other words, a filter list required by each NSLP, such as the filter list for the QoS NSLP and the filter list for the NATFW NSLP, are prepared. The filter lists for each NSLP are placed in the shared section.

The filter list can be present in each NSLP. In this case, contents of the filter lists can be matched by information related to the filter list being exchanged directly between each NSLP or via the NTLP. For example, when a content giving an instruction to rewrite <filter A> to <filter B> in the NATFW node is present in the NATFW NSLP, the information is sent to the QoS NSLP, directly or via the NTLP. In adherence to the instruction, the <filter A> included in the filter list within the QoS NSLP of the NATFW node is rewritten to <filter B>. However, when the <filter B> is already present within the QoS NSLP, the filter information is not required to be rewritten.

Furthermore, the filter list can be present in the NTLP, though this differs from the filter list definition indicated in Fig. 17. As when the filter list is present in the shared section of the NSLP, when the filter list is present in the NTLP, information (such as a raised flag) indicating which NSLP uses the filter information can be provided to each piece of filter information within the filter list. Alternatively, the filter list can be divided into NSLP.

Although the NATFW node implements the NATFW function, the implementation of the QoS function is not required. Therefore, when there is a NATFW node in which only the NATFW NSLP is present and the QoS NSLP is not present can be considered. Even in the NATFW node such as this, if the shared section of the NSLP is present or the filter list is present in the NTLP, the filter information translation (the process at Step S649 in Fig. 18) can be easily performed.

When the filter list is present in each NSLP, the filter translation can be performed if a function that can check the content of the filter list within the QoS NSLP even when the QoS NSLP is not present is provided as a special function in the NATFW node. In this case, the QoS NSLP message is required to be intercepted in the NATFW node. For the QoS NSLP message to be intercepted in the NATFW node, for example, the RAO for the NATFW NSLP, the RAO shared between the QoS NSLP and the NATFW NSLP (or shared between NSLP), or the RAO of the NE having the NTLP (in other words, the RAO for the NTLP) are added to the QoS NSLP message transmitted before the establishment of the state for routing.

Furthermore, when the NATFW node implements only the NTLP can also be considered. In this case, when the filter list is present in the NTLP, the NATFW node can easily perform the translation of the filter information (the process at Step S649 in Fig. 18). Even when the filter list is present in the shared section of the NSLP or in each NSLP, the filter information translation can be performed if a function that can check the content of the filter list within the shared section of the NSLP or in each NSLP is provided as the special function in the NATFW node. In this case, the QoS NSLP message is required to be intercepted in the NATFW node. For the QoS NSLP message to be intercepted in the NATFW node, for example, the RAO of the NE having the NTLP (in other words, the RAO for the NTLP) is added to the QoS NSLP message transmitted before the establishment of the state for routing.

By the flow ID and the filter list being defined as described above, the data path passing through the NATFW node can be easilymanaged, not limited to the case that MN performs handover.

For example, when the MN is communicating with the CN using a plurality of IP addresses for a single session (when the MN is in the multihomed-state), and when every IP address is belongs to the same subnet is considered. In this case, regardless of which IP address is set in the data packet, the data packet only passes through one path. Therefore, the NTLP layer in each NE having the NATFW NSLP should employ one of the plurality of IP addresses held by the MN as the destination (or source) of the flow ID. The filter list to be used to create the policy rule in the NATFW corresponds to a plurality of pieces of filter information, as described above. Therefore, the filter list can easily hold all of the plurality of IP addresses held by the MN.

Furthermore, in data download using the FTP and the like, the client may simultaneously use a plurality of ports to increase the download speed. In this case as well, one of the plurality of port numbers should be implemented as the flow ID, as when the MN holds a plurality of IP addresses as described above. When the flow ID is completely formed from only the IP address information, the port number is not required to be managed in the NTLP. The filter list used to create the policy rule in the NATFW corresponds to a plurality of pieces of filter information. Therefore, a plurality of port numbers can be easily held, as when the MN holds a plurality of IP addresses as described above.

Furthermore, when the session for voice over IP (VoIP) is held using H. 323, the port number being used changes during an intermediate process. However, even in this case, as a result of the flow ID and the filter list being defined as described above, the flow ID information is not required to be modified based on the change to the port number on the NTLP side. At the same time, because the filter information can be easily added to and deleted from the filter list used to create the policy rule in the NATFW, the changes to the port number can be flexibly handled.

According to the third embodiment described above, as a result of the flow ID and the filter information being divided and separately managed, the process related to the path through which the signaling message passes can be performed before the process related to the path through which the data packet passes. However, this can be further applied so that off-path signaling (also referred to as path-decoupled signaling) in which the path through which the data packet passes and the path through which the signaling message passes differ can be performed. For example, the signaling message can be directly transmitted to the proxy of a certain domain or a policy deciding point (not necessarily present on the data path)and the node can perform a process using the content of the filter list (for example, create the policy rule).

According to the first embodiment to the third embodiment of the invention, described above, when the additional service is the QoS guarantee is described. However, the invention can be applied to other additional services as well. Particularly in relation to the QoS guarantee, a specific example in which the invention is applied to the NSIS is described. However, the applicable subject of the invention is not limited to the NSIS. Furthermore, the message of the NSIS having the function of the invention is not limited to the above-described example.

Each functional block used in the explanations of each embodiment of the present embodiment, described above, can be actualized as a large scale integration (LSI) that is typically an integrated circuit. Each functional block can be individually formed into a single chip. Alternatively, some or all of the functional blocks can be included and formed into a single chip. Although referred to here as the LSI, depending on differences in integration, the integrated circuit can be referred to as the integrated circuit (IC), a system LSI, a super LSI, or an ultra LSI.

The method of forming the integrated circuit is not limited to LSI and can be actualized by a dedicated circuit or a general-purpose processor. A field programmable gate array (FPGA) that can be programmed after LSI manufacturing or a reconfigurable processor of which connections and settings of the circuit cells within the LSI can be reconfigured can be used.

Furthermore, if a technology for forming the integrated circuit that can replace LSI is introduced as a result of the advancement of semiconductor technology or a different derivative technology, the integration of the functional blocks can naturally be performed using the technology. For example, the application of biotechnology is a possibility.

### INDUSTRIAL APPLICABILITY

When the mobile terminal performs a handover, the present invention can more quickly reset the path after the handover and reduce the interrupt time during packet communication (particularly the interrupt time of the QoS path). The invention can be applied to a communication network technology or a technology for resource management related to packet transmission. Furthermore, management of the path (particularly the QoS path) can be facilitated not only when the mobile terminal performs the handover, but also when the terminal is performing communication using a plurality of IP addresses or a plurality of port numbers for a single session, or when the IP address or the port number is changed during a session. The invention can be applied to communication network technology and signal message routing management technology related to resource reservation for packet transmission.

## Claims

1. A communication system in which a plurality of access routers respectively forming a subnet are connected via a communication network that can establish a path for providing an additional service for a communication between arbitrary communication terminals via the communication network, the communication system comprising:
a moveable mobile terminal that is connected to a first access router that is one access router among the plurality of access routers and communicates using a first address acquired in a first subnet formed by the first access router;
a communication partner terminal that is connected to the communication network and serves as a communication partner of the mobile terminal; and
a communication node present in the communication network that can start a process for establishing a second path used to provide the additional service for a communication between the mobile terminal and the communication partner terminal when the mobile terminal is connected to a second access router, in a state in which a first path for providing the additional service for the communication between the mobile terminal connected to the first access router and the communication partner terminal is established, without using a second address acquired in a second subnet formed by the second access router when the mobile terminal is connected to the second access router that is one access router among the plurality of access routers.

2. The communication system according to claim 1, wherein the communication node is present near the second access router.

3. The communication system according to claim 1, wherein the communication node receives information for identifying the first path and trigger information including at least an address of the communication partner terminal on the first path, and starts the process for establishing the second path based on the trigger information.

4. The communication system according to claim 3, wherein the mobile terminal transmits the trigger information to the communication node.

5. The communication system according to claim 1, wherein the communication node establishes the second path of which the communication node itself is one end.

6. The communication system according to claim 1, wherein the communication node acquires a second address assigned to the mobile terminal that has moved to the second subnet and starts a process for establishing a third path of which one end is the second address of the mobile terminal.

7. The communication system according to claim 6, wherein:
the communication node includes an encapsulating means that, when a packet is transferred from the mobile terminal to the communication partner terminal, encapsulates the packet using a header in which an address of the communication node itself is a source address; and
as a result of the encapsulating means encapsulating the packet sent from the mobile terminal to the communication partner terminal, the packet can receive the additional service provided to the second path until the establishment of the third path is completed.

8. The communication system according to claim 6, wherein:
ends of the second path are the communication node and the communication partner terminal;
the communication partner terminal includes an encapsulating means that, when a packet is transmitted to the mobile terminal, encapsulates the packet using a header in which an address of the communication node is a destination address; and
as a result of the encapsulating means encapsulating the packet sent from the communication partner terminal to the mobile terminal, the packet can receive the additional service provided to the second path until the establishment of the third path is completed.

9. The communication system according to claim 6, wherein:
ends of the second path are the communication node present near the second access router and a partner-side neighboring communication node present near the communication partner terminal;
the partner-side neighboring communication node includes an encapsulating means that, when a packet is transmitted from the communication partner terminal to the mobile terminal, encapsulates the packet using a header in which an address of the communication node is a destination address; and
as a result of the encapsulating means encapsulating the packet sent from the communication partner terminal to the mobile terminal, the packet can receive the additional service provided to the second path until the establishment of the third path is completed.

10. The communication system according to claim 6, wherein, when the mobile terminal moves to the second subnet and the establishment of the third path is completed, the first path used in a state in which the mobile terminal is connected to the first subnet and the second path established by the communication node are deleted.

11. The communication system according to claim 1, wherein the communication node starts a process of installing a state for routing a signaling message transmitted and received when a process for establishing the second path is performed in an intermediate communication node on a path between the communication node itself and the communication partner terminal.

12. The communication system according to claim 11,
wherein:
the communication node transmits identifying information including an address of the communication node itself and an address of the communication partner terminal to the intermediate communication node; and
the intermediate communication node holds the identifying information and identifies a signaling message having the identifying information.

13. The communication system according to claim 11,
wherein: when a second address assigned to the mobile terminal that has moved to the second subnet is acquired, the communication node transmits a signaling message including information for providing an additional service related to the second path; and
the intermediate communication node uses the state for routing the signaling message and transmits the signaling message.

14. The communication system according to claim 1, wherein the additional service is a QoS guarantee.

15. A resource management device within a communication node present in a communication network, in which a plurality of access routers respectively forming a subnet are connected via the communication network and a path for providing an additional service for a communication between arbitrary communication terminals via the communication network can be established, the resource management device comprising:
a resource securing means that secures a resource for providing the additional service on the path;
a trigger receiving means that receives trigger information including at least information identifying a first path used to provide the additional service to a communication between the mobile terminal, connected to a first access router that is one access router among the plurality of access routers, and the communication partner terminal, connected to the communication network and serving as a communication partner of the mobile terminal, and an address of a communication partner terminal on the first path; and
a message generating means that, when the trigger information receiving means receives the trigger information, based on the trigger information, generates a message for starting a process of establishing a second path used to provide the additional service to a communication between the mobile terminal in a state connected to a second access router differing from the first access router and the communication partner terminal.

16. The resource management device according to claim 15, wherein information indicating that path setting is performed as a proxy of the mobile terminal is added to the message.

17. The resource management device according to claim 16, wherein the resource management device is disposed within the communication node present near the second access router.

18. The resource management device according to claim 16, wherein the trigger information includes at least information identifying the first path and an address of the communication partner terminal on the first path.

19. The resource management device according to claim 18, wherein the trigger information is received from the mobile terminal.

20. The resource management device according to claim 16, wherein the second path is established in which one end is the communication node.

21. The resource management device according to claim 16, wherein the second address assigned to the mobile terminal that has moved to the second subnet is acquired and a third path is established in which one end is the second address of the mobile terminal.

22. The resource management device according to claim 21 comprising an encapsulating means that, when a packet is transferred from the mobile terminal to the communication partner terminal, encapsulates the packet using a header in which the address of the communication node itself is a source address,
wherein, as a result of the encapsulating means encapsulating the packet sent from the mobile terminal to the communication partner terminal, the packet can receive the additional service provided to the second path until the establishment of the third path is completed.

23. The resource management device according to claim 20, wherein a message is transmitted for deleting the second path when the mobile terminal moves the second subnet and establishment of the third path is completed.

24. The resource management device according to claim 15, wherein the additional service is a QoS guarantee.

25. A resource management method performed within a communication node present in a communication network, in which a plurality of access routers respectively forming a subnet are connected via the communication network and a path for providing an additional service for a communication between arbitrary communication terminals via the communication network can be established, the resource management method comprising a step of:
securing a resource for providing the additional service on the path;
receiving trigger information including at least information identifying a first path used to provide the additional service to a communication between the mobile terminal, connected to a first access router that is one access router among the plurality of access routers, and the communication partner terminal, connected to the communication network and serving as a communication partner of the mobile terminal, and an address of a communication partner terminal on the first path; and
when the trigger information is received, based on the trigger information, generating a message for starting a process of establishing a second path used to provide the additional service to a communication between the mobile terminal in a state connected to a second access router differing from the first access router and the communication partner terminal.

26. The resource management method according to claim 25, wherein information indicating that path setting is performed as a proxy of the mobile terminal is added to the message.

27. The resource management method according to claim 26, wherein the resource management method is performed in the communication node present near the second access router.

28. The resource management method according to claim 26, wherein the trigger information includes at least information identifying the first path and an address of the communication partner terminal on the first path.

29. The resource management method according to claim 28, wherein the trigger information is received from the mobile terminal.

30. The resource management method according to claim 26, wherein the second path is established in which one end is the communication node.

31. The resource management method according to claim 26, wherein the second address assigned to the mobile terminal that has moved to the second subnet is acquired and a third path is established in which one end is the second address of the mobile terminal.

32. The resource management method according to claim 31, comprising a step of, when a packet is transferred from the mobile terminal to the communication partner terminal, encapsulating the packet using a header in which the address of the communication node itself is a source address,
wherein, as a result of the packet sent from the mobile terminal to the communication partner terminal being encapsulated, the packet can receive the additional service provided to the second path until the establishment of the third path is completed.

33. The resource management method according to claim 30, wherein a message is transmitted for deleting the second path when the mobile terminal moves the second subnet and establishment of the third path is completed.

34. The resource management method according to claim 25, wherein the additional service is a QoS guarantee.

35. A communication management device within a communication node that, in a communication performed between two communication nodes using a communication protocol including a first unit having a function for routing a signaling message and a second unit having a function for managing information related to a provided additional service, is present on a path between the two communication nodes and provides the additional service to a data packet transmitted between the two communication nodes, the communication management device comprising:
a state managing means in which the first unit manages a state for routing the signaling message transmitted in a portion of a path that is between the two communication nodes and has arbitrary end points including the communication node itself; and
a filter information managing means in which the second unit manages filter information transmitted by the signaling message and used to identify the data packet to which the additional service is to be provided.

36. The communication management device according to claim 35, wherein the state includes addresses of the arbitrary end points and the filter information includes addresses of the two communication nodes

37. The communication management device according to claim 35, wherein the first unit is disposed in a NTLP layer in a NSIS and the second unit is disposed in a NSLP layer in a NSIS.

38. A communication management method performed within a communication node that, in a communication performed between two communication nodes using a communication protocol including a first unit having a function for routing a signaling message and a second unit having a function for managing information related to a provided additional service, is present on a path between the two communication nodes and provides the additional service to a data packet transmitted between the two communication nodes, the communication management method comprising a step of:
the first unit managing a state for routing the signaling message transmitted in a portion of a path that is between the two communication nodes and has arbitrary end points including the communication node itself; and
the second unit managing filter information transmitted by the signaling message and used to identify the data packet to which the additional service is to be provided.

39. The communication management method according to claim 38, wherein the state includes addresses of the arbitrary end points and the filter information includes addresses of the two communication nodes

40. The communication management method according to claim 38, wherein the first unit is disposed in a NTLP layer in a NSIS and the second unit is disposed in a NSLP layer in a NSIS.

41. The communication management method according to claim 38, wherein the first unit and the second unit are disposed in a NTLP layer in a NSIS.

42. The communication management method according to claim 38, wherein the first unit is disposed in a NTLP layer in a NSIS and the second unit is disposed in a NSLP shared section that can be referenced by an arbitrary function on the NTLP layer in the NSIS.

43. The communication management method according to claim 38, wherein the first unit is disposed in a NTLP layer in a NSIS, the second unit is disposed in a certain function section in a NSLP layer in the NSIS, and a portion or all of the filter information is passed from the certain function section to an arbitrary function section in the NSLP layer.
